(19) **Europäisches Patentamt / European Patent Office / Office européen des brevets**

(11) **EP 4 358 565 A1**

(12) # EUROPEAN PATENT APPLICATION
published in accordance with Art. 153(4) EPC

(43) Date of publication:
**24.04.2024 Bulletin 2024/17**

(21) Application number: **22852125.8**

(22) Date of filing: **01.08.2022**

(51) International Patent Classification (IPC):
**H04W 16/14** (2009.01)   **H04W 72/04** (2023.01)

(52) Cooperative Patent Classification (CPC):
**H04W 16/14; H04W 72/04;** Y02D 30/70

(86) International application number:
**PCT/CN2022/109442**

(87) International publication number:
**WO 2023/011413 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021   CN 202110901944**

(71) Applicant: **Huawei Technologies Co., Ltd.**
**Longgang**
**Shenzhen, Guangdong 518129 (CN)**

(72) Inventors:
• **QIAO, Liang**
  **Shenzhen, Guangdong 518129 (CN)**
• **ZHANG, Jiayin**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SYNCHRONIZATION RASTER DESIGN METHOD AND APPARATUS**

(57)   In this application, a synchronization raster design method and an apparatus are provided. The method includes: A network device determines a first bandwidth. A frequency range corresponding to the first bandwidth is above 52.6 gigahertz GHz. The network device configures a plurality of synchronization rasters in the first bandwidth according to a first rule. One synchronization signal block SSB is placed on each synchronization raster, and each synchronization raster corresponds to one global synchronization number. According to the synchronization raster design method provided in this application, an adaptive first bandwidth can be provided for different subcarrier spacings. In the first bandwidth, a synchronization raster is properly designed, to place a synchronization signal block SSB, so that a terminal device can access a target SSB by traversing as few SSBs as possible in a search capability range. This reduces power consumption of the terminal device and improves SSB search efficiency of the terminal device.

Method 200

| Network device | Terminal device |

S210: The network device determines a first bandwidth

S220: The network device determines a global synchronization number in a frequency range corresponding to the first bandwidth

S230: The network device sends a synchronization signal block SSB to the terminal device based on a synchronization raster type

S240: The terminal device searches for a target SSB in the frequency range corresponding to the first bandwidth

FIG. 2

## Description

This application claims priority to Chinese Patent Application No. 202110901944.6, filed with the China National Intellectual Property Administration on August 6, 2021 and entitled "SYNCHRONIZATION RASTER DESIGN METHOD AND APPARATUS", which is incorporated herein by reference in its entirety.

## TECHNICAL FIELD

This application relates to the communication field, and more specifically, to a synchronization raster design method and an apparatus.

## BACKGROUND

With the evolution of technologies, available frequency bands increase continuously. Frequency bands of a new radio (NR: New Radio) access technology are mainly divided into two parts: an FR 1 (frequency range 1) and an FR 2 (frequency range 2). The FR 1 refers to a bandwidth ranging from 450 MHz to 6 GHz, and the FR 2 refers to a bandwidth ranging from 24.25 GHz to 52.6 GHz. In addition, a frequency band from 52.6 GHz to 71 GHz (above 52.6 GHz for short) is also included in a use range of a beyond 5th generation mobile communication system (a beyond 5.5G system). For this part of spectrum, both a non-shared spectrum and a shared spectrum exist.

A cell search is a first step in obtaining a base station service by a terminal device. The terminal device can search for and find a suitable cell through the cell search, and access the cell. A cell search process includes frequency scanning, cell detection, broadcast information obtaining, and the like. For frequency scanning, the terminal device obtains related cell broadcast information mainly by searching for a synchronization information block pattern (SS/PBCH Block/SSB, Synchronization Signal Block Pattern).

Frequency domain location information of an SSB scanned by the terminal device may be defined by using a synchronization raster (synch raster), and the synchronization raster indicates a series of frequencies that can be used to send the SSB. During base station deployment, a cell needs to be established, and each cell needs to have a specific SSB. A frequency domain location corresponding to each SSB is a synchronization raster location. A concept of the synchronization raster is introduced mainly to enable the terminal device to perform a corresponding search at a specific frequency location in the cell search process, to avoid an excessively long access delay and an energy loss caused by uncertainty of a blind search. A larger granularity configuration of the synchronization raster indicates a smaller quantity of synchronization raster points in a unit frequency domain range, and fewer search locations that need to be traversed by the terminal to search for a cell. This shortens overall time required for the cell search. However, in a design of the synchronization raster, a deployment granularity of the synchronization raster cannot be expanded without limitation, and it should be ensured that in a frequency domain range of the cell, at least one synchronization raster exists for sending an SSB.

Above 52.6 GHz, because a subcarrier spacing of an SSB becomes larger, a proper synchronization raster design is needed, so that the terminal device can quickly access an SSB corresponding to the terminal device.

## SUMMARY

In this application, a synchronization raster design method is provided. An adaptive first bandwidth is provided for different subcarrier spacings. In the first bandwidth, a synchronization raster is properly designed, to place a synchronization signal block SSB, so that a terminal device can access a target SSB by traversing as few SSBs as possible in a search capability range. This reduces power consumption of the terminal device and improves SSB search efficiency of the terminal device.

According to a first aspect, a synchronization raster design method is provided. The method includes: A network device determines a first bandwidth. A frequency range corresponding to the first bandwidth is above 52.6 gigahertz GHz. The network device configures a plurality of synchronization rasters in the first bandwidth according to a first rule. One synchronization signal block SSB is placed on each synchronization raster, and each synchronization raster corresponds to one global synchronization number.

According to the synchronization raster design method provided in this application, an adaptive first bandwidth is provided for different subcarrier spacings. In the first bandwidth, a synchronization raster is properly designed, to send a synchronization signal block SSB at the frequency domain location corresponding to the synchronization raster, so that a terminal device can access a target SSB by traversing as few SSBs as possible in a search capability range. This reduces power consumption of the terminal device and improves SSB search efficiency of the terminal device.

With reference to the first aspect, in some implementations of the first aspect, the network device determines the first bandwidth based on a first subcarrier spacing of the SSB.

Optionally, when the first subcarrier spacing is 120 kilohertz kHz, the first bandwidth is 100 megahertz MHz.

Optionally, when the first subcarrier spacing is 480 kHz, the first bandwidth is 400 MHz.

Optionally, when the first subcarrier spacing is 960 kHz, the first bandwidth is 400 MHz.

A size of the first bandwidth is determined based on a size of an operating bandwidth of the terminal device and a size of a frequency domain occupied by the SSB. The size of the first bandwidth is adapted to that of the operating bandwidth of the terminal device. More than one synchronization raster may be designed in the first bandwidth to send the SSB.

With reference to the first aspect, in some implementations of the first aspect, synchronization raster types may include a synchronization raster of a shared spectrum and a synchronization raster of a non-shared spectrum. The synchronization raster of the shared spectrum indicates an SSB that is on the synchronization raster and that is used to be sent to a terminal device of the shared spectrum. The synchronization raster of the non-shared spectrum indicates an SSB that is on the synchronization raster and that is sent to a terminal device of the non-shared spectrum. The synchronization raster of the shared spectrum corresponds to a global synchronization number of the shared spectrum, and the synchronization raster of the non-shared spectrum corresponds to a global synchronization number of the non-shared spectrum.

With reference to the first aspect, in some implementations of the first aspect, when the synchronization raster is designed, the synchronization raster of the shared spectrum and the synchronization raster of the non-shared spectrum are configured at different frequency domain locations in the first bandwidth. Optionally, the terminal device determines an SSB parsing manner based on finding the target SSB on the synchronization raster of the shared spectrum or finding the target SSB on the synchronization raster of the non-shared spectrum.

Optionally, in the first bandwidth, the synchronization raster of the shared spectrum is located at a frequency domain location corresponding to a synchronization raster with a smallest global synchronization number and/or a synchronization raster with a largest global synchronization number in the first bandwidth, and the synchronization raster of the non-shared spectrum is located at a frequency domain location corresponding to a synchronization raster with a remaining global synchronization number.

Alternatively, optionally, in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

With reference to the first aspect, in some implementations of the first aspect, when the synchronization raster is designed, a frequency domain location of the synchronization raster of the shared spectrum and a frequency domain location of the synchronization raster of the non-shared spectrum in the first bandwidth are not distinguished. When sending the SSB to the terminal device on the synchronization raster, the network device may carry first signaling. The first signaling indicates that the target SSB is an SSB corresponding to the non-shared spectrum or an SSB corresponding to the shared spectrum. The terminal device parses the target SSB based on the first signaling.

According to a second aspect, a synchronization raster design method is provided. The method includes: A terminal device determines a frequency range corresponding to a first bandwidth. The terminal device searches for a synchronization signal block SSB at a frequency domain location of a synchronization raster corresponding to a global synchronization number in the frequency range corresponding to the first bandwidth.

According to the synchronization raster design method provided in this application, an adaptive first bandwidth is provided for different subcarrier spacings. In the first bandwidth, a synchronization raster is properly designed, to send the synchronization signal block SSB at the frequency domain location corresponding to the synchronization raster, so that the terminal device can access a target SSB by traversing as few SSBs as possible in a search capability range. This reduces power consumption of the terminal device and improves SSB search efficiency of the terminal device.

With reference to the second aspect, in some implementations of the second aspect, a size of the first bandwidth is determined based on a size of a first subcarrier spacing of the SSB.

Optionally, when the first subcarrier spacing is 120 kilohertz kHz, the first bandwidth is 100 megahertz MHz.

Optionally, when the first subcarrier spacing is 480 kHz, the first bandwidth is 400 MHz.

Optionally, when the first subcarrier spacing is 960 kHz, the first bandwidth is 400 MHz.

The size of the first bandwidth is determined based on a size of an operating bandwidth of the terminal device and a size of a frequency domain occupied by the SSB. The size of the first bandwidth is adapted to that of the operating bandwidth of the terminal device. More than one synchronization raster may be designed in the first bandwidth to send the SSB.

With reference to the first aspect, in some implementations of the first aspect, synchronization raster types may include a synchronization raster of a shared spectrum and a synchronization raster of a non-shared spectrum. The synchronization raster of the shared spectrum indicates an SSB that is on the synchronization raster and that is used to be sent to a terminal device of the shared spectrum. The synchronization raster of the non-shared spectrum indicates an SSB that is on the synchronization raster and that is sent to a terminal device of the non-shared spectrum. The synchronization raster of the shared spectrum corresponds to a global synchronization number of the shared spectrum, and the synchronization raster of the non-shared spectrum corresponds to a global synchronization number of the non-shared spectrum.

With reference to the second aspect, in some implementations of the second aspect, when the synchronization raster is designed, the synchronization raster of the shared spectrum and the synchronization raster of the non-shared spectrum are configured at different frequency domain locations in the first bandwidth. Optionally, the terminal device determines an SSB parsing manner based on finding the target SSB on the synchronization raster of the shared spectrum or finding the target SSB on the synchronization raster of the non-shared spectrum.

Optionally, in the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number.

Alternatively, optionally, in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

With reference to the second aspect, in some implementations of the second aspect, when the synchronization raster is designed, a frequency domain location of the synchronization raster of the shared spectrum and a frequency domain location of the synchronization raster of the non-shared spectrum in the first bandwidth are not distinguished. When sending the SSB to the terminal device on the synchronization raster, the network device may carry first signaling. The first signaling indicates that the target SSB is an SSB corresponding to the non-shared spectrum or an SSB corresponding to the shared spectrum. The terminal device parses the target SSB based on the first signaling.

According to a third aspect, a communication apparatus is provided. The apparatus includes a processing unit configured to determine a first bandwidth. A frequency range corresponding to the first bandwidth is above 52.6 gigahertz GHz. The processing unit is further configured to configure a plurality of synchronization rasters in the first bandwidth according to a first rule. One synchronization signal block SSB is placed on each synchronization raster, and each synchronization raster corresponds to one global synchronization number.

With reference to the third aspect, in some implementations of the third aspect, that a network device determines the first bandwidth includes: The network device determines the first bandwidth based on a first subcarrier spacing of the SSB. When the first subcarrier spacing is 120 kilohertz kHz, the first bandwidth is 100 megahertz MHz. When the first subcarrier spacing is 480 kHz, the first bandwidth is 400 MHz. When the first subcarrier spacing is 960 kHz, the first bandwidth is 400 MHz.

With reference to the third aspect, in some implementations of the third aspect, synchronization raster types include a synchronization raster of a shared spectrum and a synchronization raster of a non-shared spectrum.

With reference to the third aspect, in some implementations of the third aspect, the first rule is: In the first bandwidth, the synchronization raster of the shared spectrum and the synchronization raster of the non-shared spectrum are located at different frequency domain locations.

With reference to the third aspect, in some implementations of the third aspect, that in the first bandwidth, the synchronization raster of the shared spectrum and the synchronization raster of the non-shared spectrum are located at different frequency domain locations includes: In the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number. Alternatively, in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

With reference to the third aspect, in some implementations of the third aspect, the apparatus further includes: a transceiver unit, configured to: send, at the frequency domain location corresponding to the synchronization raster of the shared spectrum, an SSB corresponding to the shared spectrum, or send, at the frequency domain location corresponding to the synchronization raster of the non-shared spectrum, an SSB corresponding to the non-shared spectrum.

With reference to the third aspect, in some implementations of the third aspect, the first rule is: In the first bandwidth, the synchronization raster of the shared spectrum and the synchronization raster of the non-shared spectrum are located at a same first frequency domain location.

With reference to the third aspect, in some implementations of the third aspect, the transceiver unit is further configured to send first signaling to a terminal device. The first signaling indicates that the first frequency domain location is used to send an SSB corresponding to the shared spectrum or an SSB corresponding to the non-shared spectrum.

In a design, the communication apparatus is a communication chip. The communication chip may include an input circuit or an interface configured to send information or data, and an output circuit or an interface configured to receive information or data.

In another design, the communication apparatus is a communication device (for example, a network device). A communication chip may include a transmitter configured to send information, and a receiver configured to receive information or data.

According to a fourth aspect, a communication apparatus is provided. The apparatus includes a processing unit, configured to determine a frequency range corresponding to a first bandwidth. The processing unit is further configured to search for a synchronization signal block SSB at a frequency domain location of a synchronization raster corresponding to a global synchronization number in the frequency range corresponding to the first bandwidth.

With reference to the fourth aspect, in some implementations of the fourth aspect, the first bandwidth is determined based on a first subcarrier spacing of the SSB. When the first subcarrier spacing is 120 kilohertz kHz, the first bandwidth is 100 megahertz MHz. When the first subcarrier spacing is 480 kHz, the first bandwidth is 400 MHz. When the first subcarrier spacing is 960 kHz, the first bandwidth is 400 MHz.

With reference to the fourth aspect, in some implementations of the fourth aspect, synchronization raster types include a synchronization raster of a shared spectrum and a synchronization raster of a non-shared spectrum.

With reference to the fourth aspect, in some implementations of the fourth aspect, a first rule is: In the first bandwidth, the synchronization raster of the shared spectrum and the synchronization raster of the non-shared spectrum are located at different frequency domain locations.

With reference to the fourth aspect, in some implementations of the fourth aspect, that in the first bandwidth, the synchronization raster of the shared spectrum and the synchronization raster of the non-shared spectrum are located at different frequency domain locations includes: In the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number. Alternatively, in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

With reference to the fourth aspect, in some implementations of the fourth aspect, a first rule is: In the first bandwidth, the synchronization raster of the shared spectrum and the synchronization raster of the non-shared spectrum are located at a same first frequency domain location.

With reference to the fourth aspect, in some implementations of the fourth aspect, the apparatus further includes: a transceiver unit, configured to receive first signaling sent by a network device. The first signaling indicates that an SSB sent at the first frequency domain location is an SSB corresponding to the shared spectrum or an SSB corresponding to the non-shared spectrum.

In a design, the communication apparatus is a communication chip. The communication chip may include an input circuit or an interface configured to send information or data, and an output circuit or an interface configured to receive information or data.

In another design, the communication apparatus is a communication device (for example, a terminal device). A communication chip may include a transmitter configured to send information, and a receiver configured to receive information or data.

According to a fifth aspect, a communication device is provided. The device includes a processor and a memory. The memory is configured to store a computer program, and the processor is configured to invoke the computer program from the memory and run the computer program, so that the communication device performs the communication method in the first aspect or the second aspect and the implementations of the first aspect or the second aspect.

Optionally, there are one or more processors, and there are one or more memories.

Optionally, the memory may be integrated with the processor, or the memory and the processor are separately disposed.

Optionally, the communication device further includes a transmitter (a transmitting device) and a receiver (a receiving device).

According to a sixth aspect, a computer program product is provided. The computer program product includes a computer program (which may also be referred to as code or instructions). When the computer program is run, a computer is enabled to perform the communication method in the first aspect or the second aspect and the implementations of the first aspect or the second aspect.

According to a seventh aspect, a computer-readable medium is provided. The computer-readable medium stores a computer program (which may also be referred to as code or instructions). When the computer program is run on a computer, the computer is enabled to perform the communication method in the first aspect or the second aspect and the implementations of the first aspect or the second aspect.

According to an eighth aspect, a communication system is provided. The system includes either the apparatus according to any implementation of the third aspect or the apparatus according to any implementation of the fourth aspect.

According to a ninth aspect, a chip system is provided. The system includes a memory and a processor. The memory is configured to store a computer program, and the processor is configured to invoke the computer program from the memory and run the computer program, so that a communication device installed with the chip system performs the communication method in the first aspect or the second aspect and the implementations of the first aspect or the second aspect.

The chip system may include an input circuit or interface configured to send information or data, and an output circuit or interface configured to receive information or data.

## BRIEF DESCRIPTION OF DRAWINGS

FIG. 1 is a schematic diagram of a system architecture according to an embodiment of this application;

FIG. 2 is an example of a synchronization raster design method according to an embodiment of this application;

FIG. 3 is a schematic diagram of an example of a relationship between a synchronization signal block and a synchronization raster according to an embodiment of this application;

FIG. 4 is a schematic diagram of an example in which a synchronization raster of a non-shared spectrum and a synchronization raster of a shared spectrum are in one first bandwidth according to an embodiment of this application;

FIG. 5 is an example of a communication apparatus for designing a synchronization raster according to an embodiment of this application; and

FIG. 6 is another example of a communication apparatus for designing a synchronization raster according to an embodiment of this application.

## DESCRIPTION OF EMBODIMENTS

The following describes technical solutions of this application with reference to accompanying drawings.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in an evolved public land mobile network (Public Land Mobile Network, PLMN), or the like. This is not limited in embodiments of this application.

A network device in embodiments of this application may be a device configured to communicate with the terminal device. The network device may be a base transceiver station (Base Transceiver Station, BTS) in the global system for mobile communications (Global System for Mobile communications, GSM) or the code division multiple access (Code Division Multiple Access, CDMA) system, a NodeB (NodeB, NB) in the wideband code division multiple access (Wideband Code Division Multiple Access, WCDMA) system, an evolved NodeB (evolved NodeB, eNB or eNodeB) in the LTE system, or a radio controller in a cloud radio access network (Cloud Radio Access Network, CRAN) scenario. Alternatively, the network device may be a relay station, an access point, a vehicle-mounted device, a wearable device, a network device in the 5G network, a network device in an evolved PLMN network, or the like. This is not limited in embodiments of this application.

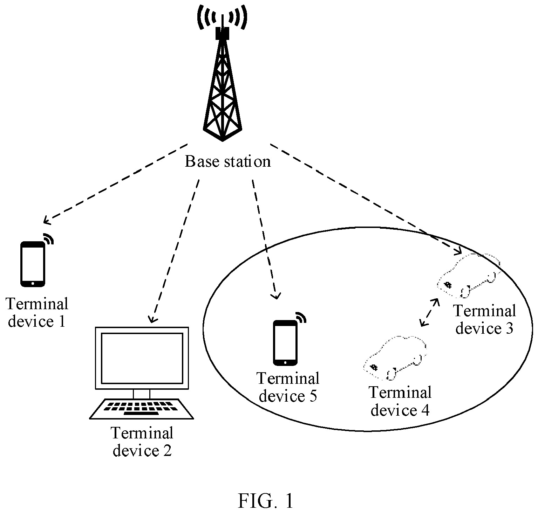

FIG. 1 is a schematic diagram of a system architecture according to an embodiment of this application. As shown in FIG. 1, in this embodiment of this application, one base station and a plurality of terminal devices may form one communication system. In the communication system, each terminal device may communicate with the base station. A link environment of the terminal device may include uplink transmission, downlink transmission, and sidelink transmission (Sidelink). Information communicated on a link includes actually communicated data information and control information for indicating and scheduling actual data. Any two terminal devices may alternatively form one communication system, link transmission of the communication system is consistent with that described above, and specific information exchange depends on a configuration manner of a network device.

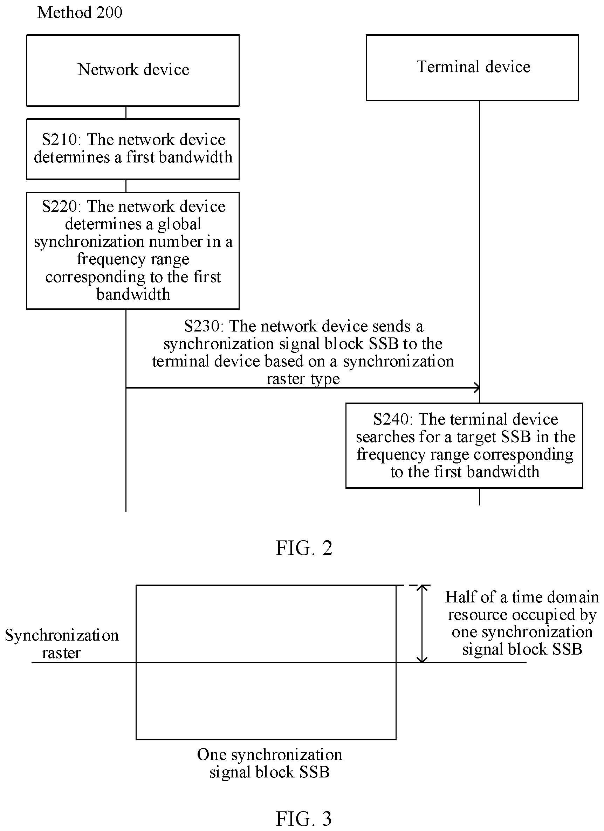

FIG. 2 is an example of a synchronization raster design method according to an embodiment of this application. As shown in FIG. 2, the method 200 includes the following.

S210: A network device determines a first bandwidth.

Specifically, the first bandwidth is a search bandwidth needed by a terminal device to perform one cell search, and the terminal device accesses a suitable cell by searching for a synchronization signal block (SSB).

Optionally, in this embodiment of this application, a frequency range of the first bandwidth is above 52.6 GHz, to be specific, 52.6 GHz to 71 GHz. The first bandwidth is one segment between 52.6 GHz and 71 GHz.

It should be understood that, in this embodiment of this application, a frequency band above 52.6 GHz is used as an example to design a synchronization raster sync raster. When a frequency range is above the frequency band in the example in this embodiment of this application, the synchronization raster may also be designed by using the method in this embodiment of this application. This is not limited in this embodiment of this application.

Optionally, the network device determines a size of the first bandwidth based on a first subcarrier spacing of the SSB.

In some embodiments, the first subcarrier spacing of the SSB is 120 kilohertz kHz, and the network device determines that the first bandwidth may be 100 MHz.

In some embodiments, the first subcarrier spacing of the SSB is 480 kHz, and the network device determines that the first bandwidth may be 400 MHz.

In some embodiments, the subcarrier spacing of the SSB is 960 kHz, and the network device determines that the first bandwidth may be 400 MHz.

It should be noted that the network device may determine the size of the first bandwidth based on a size of the SSB corresponding to the first subcarrier spacing and a bandwidth supported by the terminal device. The size of the first bandwidth ensures that a capability of the terminal device can be adapted to, the terminal device traverses a small quantity of frequency domain locations during SSB search to shorten time required for the cell search, and at least one synchronization raster exists in the first bandwidth.

S220: The network device determines a global synchronization number in the frequency range corresponding to the first bandwidth.

It should be noted that one global synchronization number corresponds to one synchronization raster, one synchronization raster corresponds to one SSB, and the network device sends the SSB at a frequency domain location of the synchronization raster corresponding to the global synchronization number. Correspondingly, the terminal device receives the SSB at the location of the synchronization raster. It should be noted that the terminal device searches for a target SSB in the frequency range corresponding to the first bandwidth, and receives the target SSB when finding the target SSB.

It should be noted that the network device determines a frequency domain location of a synchronization raster in the frequency range of the first bandwidth according to the following formula:

$$f = 24250.8 \text{ MHz} + A \text{ MHz} \times N.$$

f represents a frequency corresponding to a global synchronization number, A represents a synchronization raster granularity, N + 22256 represents the global synchronization number corresponding to the frequency f, and N is a positive integer greater than or equal to 0. It should be understood that one frequency corresponds to one global synchronization number.

In a possible implementation, the network device determines the global synchronization number in the first bandwidth according to a first rule. The network device determines to correspondingly send, on synchronization rasters corresponding to some global synchronization numbers in the frequency range of the first bandwidth, an SSB for a terminal device located in a shared spectrum. A synchronization raster on which the SSB for the terminal device located in the shared spectrum is sent is a synchronization raster of the shared spectrum, and a global synchronization number corresponding to the synchronization raster is a global synchronization number of the shared spectrum. The network device correspondingly sends, on synchronization rasters corresponding to some global synchronization numbers, an SSB for a terminal device located in a non-shared spectrum. A synchronization raster on which the SSB for the terminal device located in the non-shared spectrum is sent is a synchronization raster of the non-shared spectrum, and a global synchronization number corresponding to the synchronization raster is a global synchronization number of the non-shared spectrum. In a possible implementation, the synchronization raster of the shared spectrum is a synchronization raster with a smallest number and/or a synchronization raster with a largest number in the first bandwidth, and the other synchronization raster is the synchronization raster of the non-shared spectrum. Alternatively, in a possible implementation, the synchronization raster of the non-shared spectrum is a synchronization raster with a smallest number and/or a synchronization raster with a largest number in the first bandwidth, and the other synchronization raster is the synchronization raster of the shared spectrum.

In some embodiments, according to the foregoing first rule, when the subcarrier spacing is 120 kHz, the network device determines that the first bandwidth is 100 MHz. In the frequency band above 52.6 GHz, global synchronization numbers determined according to the first formula and based on the first bandwidth are shown in Table 1, where a synchronization raster granularity is 17.28 MHz. An example in which synchronization rasters of the shared spectrum are a synchronization raster with a smallest number and a synchronization raster with a largest number in the first bandwidth, and the other synchronization rasters are synchronization rasters of the non-shared spectrum is used in Table 1. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. An example in which the synchronization raster of the shared spectrum is a synchronization raster with a smallest number in the first bandwidth, and the other synchronization rasters are the rasters of the non-shared spectrum is used in Table 2. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. An example in which the synchronization raster of the shared spectrum is a synchronization raster with a largest number in the first bandwidth, and the other synchronization rasters are the rasters of the non-shared spectrum is used in Table 3. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum.

It should be noted that a utilization rate of the first bandwidth cannot reach 100%. For example, the utilization rate of the bandwidth can only reach 95.04%. Therefore, within 100 MHz, a location of a largest synchronization raster in frequency domain is less than or equal to the 83.06th MHz in the bandwidth, where 83.06 MHz = 99.88 MHz - 14.4 MHz - 2.42 MHz. Within 100 MHz, a location of a smallest synchronization raster in frequency domain is greater than or equal to the 16.82th MHz, where 16.82 MHz = 14.4 MHz + 2.42 MHz. It should be noted that in some embodiments, in the first bandwidth, one complete SSB can be placed on a synchronization raster corresponding to each global synchronization number. This is used as an example in this application, but is not limited thereto.

It should be noted that, when the first subcarrier spacing is 120 kHz, the corresponding SSB occupies a bandwidth of 28.8 MHz (that is, 120 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 14.4 MHz on both an upper side and a lower side of the synchronization raster, and a schematic diagram of the SSB is shown in FIG. 3. It should be noted that, corresponding to the foregoing formula, a frequency in a formula corresponding to the synchronization raster corresponds to a center frequency of an SSB placed on the synchronization raster.

It should be noted that a spectrum segment 52.6 GHz to 57 GHz is a non-shared spectrum for all countries. Therefore, only a synchronization raster design method in a frequency band range of 57 GHz to 71 GHz is provided herein.

**Table 1 Global synchronization numbers of the shared spectrum and the non-shared spectrum when the frequency band is 57 GHz to 71 GHz, the synchronization raster granularity is 17.28 MHz, and the subcarrier spacing of the SSB is 120 kHz**

| Bandwidth (GHz) | All global synchronization numbers Sync raster | Global synchronization number of the shared spectrum Sync raster | Global synchronization number of the non-shared spectrum Sync raster |
|---|---|---|---|
| 57.0-57.1 | 24153, 24154, 24155, 24156 | 24153, 24156 | 24154, 24155 |
| 57.1-57.2 | 24159, 24160, 24161 | 24159, 24161 | 24160 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 57.2-57.3 | 24164, 24165, 24166, 24167 | 24164, 24167 | 24165, 24166 |
| 57.3-57.4 | 24170, 24171, 24172, 24173 | 24170, 24173 | 24171, 24172 |
| 57.4-57.5 | 24176, 24177, 24178, 24179 | 24176, 24179 | 24177, 24178 |
| 57.5-57.6 | 24182, 24183, 24184 | 24182, 24184 | 24183 |
| 57.6-57.7 | 24187, 24188, 24189, 24190 | 24187, 24190 | 24188, 24189 |
| 57.7-57.8 | 24193, 24194, 24195, 24196 | 24193, 24196 | 24194, 24195 |
| 57.8-57.9 | 24199, 24200, 24201, 24202 | 24199, 24199 | 24200, 24201 |
| 57.9-58.0 | 24205, 24206, 24207, 24208 | 24205, 24208 | 24206, 24207 |
| 58.0-58.1 | 24211, 24212, 24213 | 24211, 24213 | 24212 |
| 58.1-58.2 | 24216, 24217, 24218, 24219 | 24216,24219 | 24217, 24218 |
| 58.2-58.3 | 24222, 24223, 24224, 24225 | 24222, 24225 | 24223, 24224 |
| 58.3-58.4 | 24228, 24229, 24230, 24231 | 24228,24231 | 24229, 24230 |
| 58.4-58.5 | 24234, 24235, 24236, 24237 | 24234, 24237 | 24235, 24236 |
| 58.5-58.6 | 24240, 24241, 24242, 24243 | 24240, 24243 | 24241, 24242 |
| 58.6-58.7 | 24245, 24246, 24247, 24248 | 24245, 24248 | 24246, 24247 |
| 58.7-58.8 | 24251, 24252, 24253, 24254 | 24251,24254 | 24252, 24253 |
| 58.8-58.9 | 24257, 24258, 24259, 24260 | 24257, 24260 | 24258, 24259 |
| 58.9-59.0 | 24263, 24264, 24265, 24266 | 24263, 24266 | 24264, 24265 |
| 59.0-59.1 | 24268, 24267, 24268, 24269 | 24268, 24269 | 24267, 24268 |
| 59.1-59.2 | 24274, 24275, 24276, 24277 | 24274, 24277 | 24275, 24276 |
| 59.2-59.3 | 24280, 24281, 24282, 24283 | 24280, 24283 | 24281, 24282 |
| 59.3-59.4 | 24286, 24287, 24288, 24289 | 24286, 24289 | 24287, 24288 |
| 59.4-59.5 | 24292, 24293, 24294 | 24292, 24294 | 24293 |
| 59.5-59.6 | 24297, 24298, 24299, 24300 | 24297, 24300 | 24298, 24299 |
| 59.6-59.7 | 24303, 24304, 24305, 24306 | 24303, 24306 | 24304, 24305 |
| 59.7-59.8 | 24309, 24310, 24311, 24312 | 24309, 24312 | 24310, 24311 |
| 59.8-59.9 | 24315, 24316, 24317, 24318 | 24315,24318 | 24316, 24317 |
| 59.9-60.0 | 24321, 24322, 24323 | 24321, 24323 | 24322 |
| 60.0-60.1 | 24326, 24327, 24328, 24329 | 24326, 24329 | 24327, 24328 |
| 60.1-60.2 | 24332, 24333, 24334, 24335 | 24332, 24335 | 24333, 24334 |
| 60.2-60.3 | 24338, 24339, 24340, 24341 | 24338,24341 | 24339, 24340 |
| 60.3-60.4 | 24344, 24345, 24346, 24347 | 24344, 24347 | 24345, 24346 |
| 60.4-60.5 | 24349, 24350, 24351, 24352 | 24349,24352 | 24350,24351 |
| 60.5-60.6 | 24355, 24356, 24357, 24358 | 24355, 24358 | 24356, 24357 |
| 60.6-60.7 | 24361, 24362, 24363, 24364 | 24361, 24364 | 24362, 24363 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 60.7-60.8 | 24367, 24368, 24369, 24370 | 24367, 24370 | 24368, 24369 |
| 60.8-60.9 | 24373, 24374, 24375 | 24373, 24375 | 24374 |
| 60.9-61.0 | 24378, 24379, 24380, 24381 | 24378, 24381 | 24379, 24380 |
| 61.0-61.1 | 24384, 24385, 24386, 24387 | 24384, 24387 | 24385, 24386 |
| 61.1-61.2 | 24390, 24391, 24392, 24393 | 24390, 24393 | 24391, 24392 |
| 61.2-61.3 | 24396, 24397, 24398, 24399 | 24396,24399 | 24397, 24398 |
| 61.3-61.4 | 24402, 24403, 24404 | 24402, 24404 | 24403 |
| 61.4-61.5 | 24407, 24408, 24409, 24410 | 24407,24410 | 24408, 24409 |
| 61.5-61.6 | 24413, 24414, 24415, 24416 | 24413, 24416 | 24414, 24415 |
| 61.6-61.7 | 24419, 24420, 24421, 24422 | 24419, 24422 | 24420, 24421 |
| 61.7-61.8 | 24425, 24426, 24427, 24428 | 24425, 24428 | 24426, 24427 |
| 61.8-61.9 | 24431, 24432, 24433 | 24431, 24433 | 24432 |
| 61.9-62.0 | 24436, 24437, 24438, 24439 | 24436, 24439 | 24437, 24438 |
| 62.0-62.1 | 24442, 24443, 24444, 24445 | 24442, 24445 | 24443, 24444 |
| 62.1-62.2 | 24448, 24449, 24450, 24451 | 24448,24451 | 24449, 24450 |
| 62.2-62.3 | 24454, 24455, 24456 | 24454, 24456 | 24455 |
| 62.3-62.4 | 24459, 24460, 24461, 24462 | 24459, 24462 | 24460, 24461 |
| 62.4-62.5 | 24465, 24466, 24467, 24468 | 24465, 24468 | 24466, 24467 |
| 62.5-62.6 | 24471, 24472, 24473, 24474 | 24471, 24474 | 24472, 24473 |
| 62.6-62.7 | 24477, 24478, 24479, 24480 | 24477, 24480 | 24478, 24479 |
| 62.7-62.8 | 24483, 24484, 24485 | 24483, 24485 | 24484 |
| 62.8-62.9 | 24488, 24489, 24490, 24491 | 24488, 24491 | 24489, 24490 |
| 62.9-63.0 | 24494, 24495, 24496, 24497 | 24494, 24497 | 24495, 24496 |
| 63.0-63.1 | 24500, 24501, 24502, 24503 | 24497, 24503 | 24501, 24502 |
| 63.1-63.2 | 24506, 24507, 24508, 24509 | 24506, 24509 | 24507, 24508 |
| 63.2-63.3 | 24512, 24513, 24514 | 24512,24514 | 24513 |
| 63.3-63.4 | 24517, 24518, 24519, 24520 | 24517,24520 | 24518, 24519 |
| 63.4-63.5 | 24523, 24524, 24525, 24526 | 24523, 24526 | 24524, 24525 |
| 63.5-63.6 | 24529, 24530, 24531, 24532 | 24529, 24532 | 24530, 24531 |
| 63.6-63.7 | 24535, 24536, 24537, 24538 | 24535, 24538 | 24536, 24537 |
| 63.7-63.8 | 24540, 24541, 24542, 24543 | 24540, 24543 | 24541, 24542 |
| 63.8-63.9 | 24546, 24547, 24548, 24549 | 24546,24549 | 24547, 24548 |
| 63.9-64.0 | 24552, 24553, 24554, 24555 | 24552, 24555 | 24553, 24554 |
| 64.0-64.1 | 24558, 24559, 24560, 24561 | 24558,24561 | 24559, 24560 |
| 64.1-64.2 | 24564, 24565, 24566 | 24564, 24566 | 24565 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 64.2-64.3 | 24569, 24570, 24571, 24572 | 24569, 24572 | 24570, 24571 |
| 64.3-64.4 | 24575, 24576, 24577, 24578 | 24575, 24578 | 24576, 24577 |
| 64.4-64.5 | 24581, 24582, 24583, 24584 | 24581, 24584 | 24582, 24583 |
| 64.5-64.6 | 24587, 24588, 24599, 24600 | 24587, 24600 | 24588, 24599 |
| 64.6-64.7 | 24593, 24594, 24595 | 24593,24595 | 24594 |
| 64.7-64.8 | 24598, 24599, 24600, 24601 | 24598,24601 | 24599, 24600 |
| 64.8-64.9 | 24604, 24605, 24606, 24607 | 24604, 24607 | 24605, 24606 |
| 64.9-65.0 | 24610, 24611, 24612, 24613 | 24610,24613 | 24611, 24612 |
| 65.0-65.1 | 24616, 24617, 24618, 24619 | 24616,24619 | 24617, 24618 |
| 65.1-65.2 | 24621, 24622, 24623, 24624 | 24621, 24624 | 24622, 24623 |
| 65.2-65.3 | 24627, 24628, 24628, 24630 | 24627, 24630 | 24628, 24628 |
| 65.3-65.4 | 24633, 24634, 24635, 24636 | 24633, 24636 | 24634, 24635 |
| 65.4-65.5 | 24639,24640,24641,24642 | 24639,24642 | 24640, 24641 |
| 65.5-65.6 | 24645, 24646, 24647 | 24645, 24647 | 24646 |
| 65.6-65.7 | 24650, 24651, 24652, 24653 | 24650, 24653 | 24651, 24652 |
| 65.7-65.8 | 24656, 24657, 24658, 24659 | 24656,24659 | 24657, 24658 |
| 65.8-65.9 | 24662, 24663, 24664, 24665 | 24662, 24665 | 24663, 24664 |
| 65.9-66.0 | 24668, 24669, 24670, 24671 | 24668,24671 | 24669, 24670 |
| 66.0-66.1 | 24674, 24675, 24676 | 24674, 24676 | 24675 |
| 66.1-66.2 | 24679, 24680, 24681, 24682 | 24679, 24682 | 24680, 24681 |
| 66.2-66.3 | 24685, 24686, 24687, 24688 | 24685, 24688 | 24686, 24687 |
| 66.3-66.4 | 24691, 24692, 24693, 24694 | 24691, 24694 | 24692, 24693 |
| 66.4-66.5 | 24697, 24698, 24699, 24700 | 24697, 24700 | 24698, 24699 |
| 66.5-66.6 | 24702, 24703, 24704, 24705 | 24702, 24705 | 24703, 24704 |
| 66.6-66.7 | 24708, 24709, 24710, 24711 | 24708, 24711 | 24709, 24710 |
| 66.7-66.8 | 24714, 24715, 24716, 24717 | 24714, 24717 | 24715, 24716 |
| 66.8-66.9 | 24720, 24721, 24722, 24723 | 24720, 24723 | 24721, 24722 |
| 66.9-67.0 | 24726, 24727, 24728 | 24726, 24728 | 24727 |
| 67.0-67.1 | 24731, 24732, 24733, 24734 | 24731, 24734 | 24732, 24733 |
| 67.1-67.2 | 24737, 24738, 24739, 24740 | 24737, 24740 | 24738, 24739 |
| 67.2-67.3 | 24743, 24744, 24745, 24746 | 24743, 24746 | 24744, 24745 |
| 67.3-67.4 | 24749, 24750, 24751, 24752 | 24749, 24752 | 24750, 24751 |
| 67.4-67.5 | 24755, 24756, 24757 | 24755, 24757 | 24756 |
| 67.5-67.6 | 24760, 24761, 24762, 24763 | 24760, 24763 | 24761, 24762 |
| 67.6-67.7 | 24766, 24767, 24768, 24769 | 24766, 24769 | 24767, 24768 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 67.7-67.8 | 24772, 24773, 24774, 24775 | 24772, 24775 | 24773, 24774 |
| 67.8-67.9 | 24778, 24779, 24780, 24781 | 24778, 24781 | 24779, 24780 |
| 67.9-68.0 | 24783, 24784, 24785, 24786 | 24783, 24786 | 24784, 24785 |
| 68.0-68.1 | 24789, 24790, 24791, 24792 | 24789, 24792 | 24790, 24791 |
| 68.1-68.2 | 24795, 24796, 24797, 24798 | 24795, 24798 | 24796, 24797 |
| 68.2-68.3 | 24801, 24802, 24803, 24804 | 24801, 24804 | 24802, 24803 |
| 68.3-68.4 | 24807, 24808, 24809 | 24807, 24810 | 24808 |
| 68.4-68.5 | 24812, 24813, 24814, 24815 | 24812, 24815 | 24813, 24814 |
| 68.5-68.6 | 24818, 24819, 24820, 24821 | 24818, 24821 | 24819, 24820 |
| 68.6-68.7 | 24824, 24825, 24826, 24827 | 24824, 24827 | 24825, 24826 |
| 68.7-68.8 | 24830, 24831, 24832, 24833 | 24830, 24833 | 24831, 24832 |
| Sync raster | Sync raster | Sync raster | |
| 68.8-68.9 | 24836, 24837, 24838 | 24836, 24838 | 24837 |
| 68.9-69.0 | 24841, 24842, 24843, 24844 | 24841, 24844 | 24842, 24843 |
| 69.0-69.1 | 24847, 24848, 24849, 24850 | 24847, 24850 | 24848, 24849 |
| 69.1-69.2 | 24853, 24854, 24855, 24856 | 24853, 24856 | 24854, 24855 |
| 69.2-69.3 | 24859, 24860, 24861, 24862 | 24859, 24862 | 24860, 24861 |
| 69.3-69.4 | 24864, 24865, 24866, 24867 | 24864, 24867 | 24865, 24866 |
| 69.4-69.5 | 24870, 24871, 24872, 24873 | 24870, 24873 | 24871, 24872 |
| 69.5-69.6 | 24876, 24877, 24878, 24879 | 24876, 24879 | 24877, 24878 |
| 69.6-69.7 | 24882, 24883, 24884, 24885 | 24882, 24885 | 24883, 24884 |
| 69.7-69.8 | 24888, 24889, 24890, 24891 | 24888, 24891 | 24889, 24890 |
| 69.8-69.9 | 24893, 24894, 24895, 24896 | 24893, 24896 | 24894, 24895 |
| 69.9-70.0 | 24899, 24900, 24901, 24902 | 24899, 24902 | 24900, 24901 |
| 70.0-70.1 | 24905, 24906, 24907, 24908 | 24905, 24908 | 24906, 24907 |
| 70.1-70.2 | 24911, 24912, 24913, 24914 | 24911, 24914 | 24912, 24913 |
| 70.2-70.3 | 24917, 24918, 24919 | 24917, 24919 | 24918 |
| 70.3-70.4 | 24922, 24923, 24924, 24925 | 24922, 24925 | 24923, 24924 |
| 70.4-70.5 | 24928, 24929, 24930, 24931 | 24928, 24931 | 24929, 24930 |
| 70.5-70.6 | 24934, 24935, 24936, 24937 | 24934, 24937 | 24935, 24936 |
| 70.6-70.7 | 24940, 24941, 24942, 24943 | 24940, 24943 | 24941, 24942 |
| 70.7-70.8 | 24946, 24947, 24948 | 24946, 24948 | 24947 |
| 70.8-70.9 | 24951, 24952, 24953, 24954 | 24951, 24954 | 24952, 24953 |
| 70.9-71.0 | 24957, 24958, 24959, 24960 | 24957, 24960 | 24958, 24959 |

**Table 2 Global synchronization numbers of the shared spectrum and the non-shared spectrum when the frequency band is 57 GHz to 71 GHz, the synchronization raster granularity is 17.28 MHz, and the subcarrier spacing of the SSB is 120 kHz**

| Bandwidth (GHz) | All global synchronization numbers Sync raster | Global synchronization number of the shared spectrum Sync raster | Global synchronization number of the non-shared spectrum Sync raster |
|---|---|---|---|
| 57.0-57.1 | 24153, 24154, 24155, 24156 | 24153 | 24154, 24155, 24156 |
| 57.1-57.2 | 24159, 24160, 24161 | 24159 | 24160, 24161 |
| 57.2-57.3 | 24164, 24165, 24166, 24167 | 24164 | 24165, 24166, 24167 |
| 57.3-57.4 | 24170, 24171, 24172, 24173 | 24170 | 24171, 24172, 24173 |
| 57.4-57.5 | 24176, 24177, 24178, 24179 | 24176 | 24177, 24178, 24179 |
| 57.5-57.6 | 24182, 24183, 24184 | 24182 | 24183, 24184 |
| 57.6-57.7 | 24187, 24188, 24189, 24190 | 24187 | 24188, 24189, 24190 |
| 57.7-57.8 | 24193, 24194, 24195, 24196 | 24193 | 24194, 24195, 24196 |
| 57.8-57.9 | 24199, 24200, 24201, 24202 | 24199 | 24200, 24201, 24199 |
| 57.9-58.0 | 24205, 24206, 24207, 24208 | 24205 | 24206, 24207, 24208 |
| 58.0-58.1 | 24211, 24212, 24213 | 24211 | 24212, 24213 |
| 58.1-58.2 | 24216, 24217, 24218, 24219 | 24216 | 24217, 24218, 24219 |
| 58.2-58.3 | 24222, 24223, 24224, 24225 | 24222 | 24223, 24224, 24225 |
| 58.3-58.4 | 24228, 24229, 24230, 24231 | 24228 | 24229, 24230, 24231 |
| 58.4-58.5 | 24234, 24235, 24236, 24237 | 24234 | 24235, 24236, 24237 |
| 58.5-58.6 | 24240, 24241, 24242, 24243 | 24240 | 24241, 24242, 24243 |
| 58.6-58.7 | 24245, 24246, 24247, 24248 | 24245 | 24246, 24247, 24248 |
| 58.7-58.8 | 24251, 24252, 24253, 24254 | 24251 | 24252, 24253, 24254 |
| 58.8-58.9 | 24257, 24258, 24259, 24260 | 24257 | 24258, 24259, 24260 |
| 58.9-59.0 | 24263, 24264, 24265, 24266 | 24263 | 24264, 24265, 24266 |
| 59.0-59.1 | 24268, 24267, 24268, 24269 | 24268 | 24267, 24268, 24269 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 59.1-59.2 | 24274, 24275, 24276, 24277 | 24274 | 24275, 24276, 24277 |
| 59.2-59.3 | 24280, 24281, 24282, 24283 | 24280 | 24281, 24282, 24283 |
| 59.3-59.4 | 24286, 24287, 24288, 24289 | 24286 | 24287, 24288, 24289 |
| 59.4-59.5 | 24292, 24293, 24294 | 24292 | 24293, 24294 |
| 59.5-59.6 | 24297, 24298, 24299, 24300 | 24297 | 24298, 24299, 24300 |
| 59.6-59.7 | 24303, 24304, 24305, 24306 | 24303 | 24304, 24305, 24306 |
| 59.7-59.8 | 24309, 24310, 24311, 24312 | 24309 | 24310, 24311, 24312 |
| 59.8-59.9 | 24315, 24316, 24317, 24318 | 24315 | 24316, 24317, 24318 |
| 59.9-60.0 | 24321, 24322, 24323 | 24321 | 24322, 24323 |
| 60.0-60.1 | 24326, 24327, 24328, 24329 | 24326 | 24327, 24328, 24329 |
| 60.1-60.2 | 24332, 24333, 24334, 24335 | 24332 | 24333, 24334, 24335 |
| 60.2-60.3 | 24338, 24339, 24340, 24341 | 24338 | 24339, 24340, 24341 |
| 60.3-60.4 | 24344, 24345, 24346, 24347 | 24344 | 24345, 24346, 24347 |
| 60.4-60.5 | 24349, 24350, 24351, 24352 | 24349 | 24350, 24351, 24352 |
| 60.5-60.6 | 24355, 24356, 24357, 24358 | 24355 | 24356, 24357, 24358 |
| 60.6-60.7 | 24361, 24362, 24363, 24364 | 24361 | 24362, 24363, 24364 |
| 60.7-60.8 | 24367, 24368, 24369, 24370 | 24367 | 24368, 24369, 24370 |
| 60.8-60.9 | 24373, 24374, 24375 | 24373 | 24374, 24375 |
| 60.9-61.0 | 24378, 24379, 24380, 24381 | 24378 | 24379, 24380, 24381 |
| 61.0-61.1 | 24384, 24385, 24386, 24387 | 24384 | 24385, 24386, 24387 |
| 61.1-61.2 | 24390, 24391, 24392, 24393 | 24390 | 24391, 24392, 24393 |
| 61.2-61.3 | 24396, 24397, 24398, 24399 | 24396 | 24397, 24398, 24399 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 61.3-61.4 | 24402, 24403, 24404 | 24402 | 24403, 24404 |
| 61.4-61.5 | 24407, 24408, 24409, 24410 | 24407 | 24408, 24409, 24410 |
| 61.5-61.6 | 24413, 24414, 24415, 24416 | 24413 | 24414, 24415, 24416 |
| 61.6-61.7 | 24419, 24420, 24421, 24422 | 24419 | 24420, 24421, 24422 |
| 61.7-61.8 | 24425, 24426, 24427, 24428 | 24425 | 24426, 24427, 24428 |
| 61.8-61.9 | 24431, 24432, 24433 | 24431 | 24432, 24433 |
| 61.9-62.0 | 24436, 24437, 24438, 24439 | 24436 | 24437, 24438, 24439 |
| 62.0-62.1 | 24442, 24443, 24444, 24445 | 24442 | 24443, 24444, 24445 |
| 62.1-62.2 | 24448, 24449, 24450, 24451 | 24448 | 24449, 24450, 24451 |
| 62.2-62.3 | 24454, 24455, 24456 | 24454 | 24455, 24456 |
| 62.3-62.4 | 24459, 24460, 24461, 24462 | 24459 | 24460, 24461, 24462 |
| 62.4-62.5 | 24465, 24466, 24467, 24468 | 24465 | 24466, 24467, 24468 |
| 62.5-62.6 | 24471, 24472, 24473, 24474 | 24471 | 24472, 24473, 24474 |
| 62.6-62.7 | 24477, 24478, 24479, 24480 | 24477 | 24478, 24479, 24480 |
| 62.7-62.8 | 24483, 24484, 24485 | 24483 | 24484, 24485 |
| 62.8-62.9 | 24488, 24489, 24490, 24491 | 24488 | 24489, 24490, 24491 |
| 62.9-63.0 | 24494, 24495, 24496, 24497 | 24494 | 24495, 24496, 24497 |
| 63.0-63.1 | 24500, 24501, 24502, 24503 | 24497 | 24501, 24502, 24503 |
| 63.1-63.2 | 24506, 24507, 24508, 24509 | 24506 | 24507, 24508, 24509 |
| 63.2-63.3 | 24512, 24513, 24514 | 24512 | 24513, 24514 |
| 63.3-63.4 | 24517, 24518, 24519, 24520 | 24517 | 24518, 24519, 24520 |
| 63.4-63.5 | 24523, 24524, 24525, 24526 | 24523 | 24524, 24525, 24526 |
| 63.5-63.6 | 24529, 24530, 24531, 24532 | 24529 | 24530, 24531, 24532 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 63.6-63.7 | 24535, 24536, 24537, 24538 | 24535 | 24536, 24537, 24538 |
| 63.7-63.8 | 24540, 24541, 24542, 24543 | 24540 | 24541, 24542, 24543 |
| 63.8-63.9 | 24546, 24547, 24548, 24549 | 24546 | 24547, 24548, 24549 |
| 63.9-64.0 | 24552, 24553, 24554, 24555 | 24552 | 24553, 24554, 24555 |
| 64.0-64.1 | 24558, 24559, 24560, 24561 | 24558 | 24559, 24560, 24561 |
| 64.1-64.2 | 24564, 24565, 24566 | 24564 | 24565, 24566 |
| 64.2-64.3 | 24569, 24570, 24571, 24572 | 24569 | 24570, 24571, 24572 |
| 64.3-64.4 | 24575, 24576, 24577, 24578 | 24575 | 24576, 24577, 24578 |
| 64.4-64.5 | 24581, 24582, 24583, 24584 | 24581 | 24582, 24583, 24584 |
| 64.5-64.6 | 24587, 24588, 24599, 24600 | 24587 | 24588, 24599, 24600 |
| 64.6-64.7 | 24593, 24594, 24595 | 24593 | 24594, 24595 |
| 64.7-64.8 | 24598, 24599, 24600, 24601 | 24598 | 24599, 24600, 24601 |
| 64.8-64.9 | 24604, 24605, 24606, 24607 | 24604 | 24605, 24606, 24607 |
| 64.9-65.0 | 24610, 24611, 24612, 24613 | 24610 | 24611, 24612, 24613 |
| 65.0-65.1 | 24616, 24617, 24618, 24619 | 24616 | 24617, 24618, 24619 |
| 65.1-65.2 | 24621, 24622, 24623, 24624 | 24621 | 24622, 24623, 24624 |
| 65.2-65.3 | 24627, 24628, 24628, 24630 | 24627 | 24628, 24628, 24630 |
| 65.3-65.4 | 24633, 24634, 24635, 24636 | 24633 | 24634, 24635, 24636 |
| 65.4-65.5 | 24639, 24640, 24641, 24642 | 24639 | 24640, 24641, 24642 |
| 65.5-65.6 | 24645, 24646, 24647 | 24645 | 24646, 24647 |
| 65.6-65.7 | 24650, 24651, 24652, 24653 | 24650 | 24651, 24652, 24653 |
| 65.7-65.8 | 24656, 24657, 24658, 24659 | 24656 | 24657, 24658, 24659 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 65.8-65.9 | 24662, 24663, 24664, 24665 | 24662 | 24663, 24664, 24665 |
| 65.9-66.0 | 24668, 24669, 24670, 24671 | 24668 | 24669, 24670, 24671 |
| 66.0-66.1 | 24674, 24675, 24676 | 24674 | 24675, 24676 |
| 66.1-66.2 | 24679, 24680, 24681, 24682 | 24679 | 24680, 24681, 24682 |
| 66.2-66.3 | 24685, 24686, 24687, 24688 | 24685 | 24686, 24687, 24688 |
| 66.3-66.4 | 24691, 24692, 24693, 24694 | 24691 | 24692, 24693, 24694 |
| 66.4-66.5 | 24697, 24698, 24699, 24700 | 24697 | 24698, 24699, 24700 |
| 66.5-66.6 | 24702, 24703, 24704, 24705 | 24702 | 24703, 24704, 24705 |
| 66.6-66.7 | 24708, 24709, 24710, 24711 | 24708 | 24709, 24710, 24711 |
| 66.7-66.8 | 24714, 24715, 24716, 24717 | 24714 | 24715, 24716, 24717 |
| 66.8-66.9 | 24720, 24721, 24722, 24723 | 24720 | 24721, 24722, 24723 |
| 66.9-67.0 | 24726, 24727, 24728 | 24726 | 24727, 24728 |
| 67.0-67.1 | 24731, 24732, 24733, 24734 | 24731 | 24732, 24733, 24734 |
| 67.1-67.2 | 24737, 24738, 24739, 24740 | 24737 | 24738, 24739, 24740 |
| 67.2-67.3 | 24743, 24744, 24745, 24746 | 24743 | 24744, 24745, 24746 |
| 67.3-67.4 | 24749, 24750, 24751, 24752 | 24749 | 24750, 24751, 24752 |
| 67.4-67.5 | 24755, 24756, 24757 | 24755 | 24756, 24757 |
| 67.5-67.6 | 24760, 24761, 24762, 24763 | 24760 | 24761, 24762, 24763 |
| 67.6-67.7 | 24766, 24767, 24768, 24769 | 24766 | 24767, 24768, 24769 |
| 67.7-67.8 | 24772, 24773, 24774, 24775 | 24772 | 24773, 24774, 24775 |
| 67.8-67.9 | 24778, 24779, 24780, 24781 | 24778 | 24779, 24780, 24781 |
| 67.9-68.0 | 24783, 24784, 24785, 24786 | 24783 | 24784, 24785, 24786 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 68.0-68.1 | 24789, 24790, 24791, 24792 | 24789 | 24790, 24791, 24792 |
| 68.1-68.2 | 24795, 24796, 24797, 24798 | 24795 | 24796, 24797, 24798 |
| 68.2-68.3 | 24801, 24802, 24803, 24804 | 24801 | 24802, 24803, 24804 |
| 68.3-68.4 | 24807, 24808, 24809 | 24807 | 24808, 24810 |
| 68.4-68.5 | 24812, 24813, 24814, 24815 | 24812 | 24813, 24814, 24815 |
| 68.5-68.6 | 24818, 24819, 24820, 24821 | 24818 | 24819, 24820, 24821 |
| 68.6-68.7 | 24824, 24825, 24826, 24827 | 24824 | 24825, 24826, 24827 |
| 68.7-68.8 | 24830, 24831, 24832, 24833 | 24830 | 24831, 24832, 24833 |
| 68.8-68.9 | 24836, 24837, 24838 | 24836 | 24837, 24838 |
| 68.9-69.0 | 24841, 24842, 24843, 24844 | 24841 | 24842, 24843, 24844 |
| 69.0-69.1 | 24847, 24848, 24849, 24850 | 24847 | 24848, 24849, 24850 |
| 69.1-69.2 | 24853, 24854, 24855, 24856 | 24853 | 24854, 24855, 24856 |
| 69.2-69.3 | 24859, 24860, 24861, 24862 | 24859 | 24860, 24861, 24862 |
| 69.3-69.4 | 24864, 24865, 24866, 24867 | 24864 | 24865, 24866, 24867 |
| 69.4-69.5 | 24870, 24871, 24872, 24873 | 24870 | 24871, 24872, 24873 |
| 69.5-69.6 | 24876, 24877, 24878, 24879 | 24876 | 24877, 24878, 24879 |
| 69.6-69.7 | 24882, 24883, 24884, 24885 | 24882 | 24883, 24884, 24885 |
| 69.7-69.8 | 24888, 24889, 24890, 24891 | 24888 | 24889, 24890, 24891 |
| 69.8-69.9 | 24893, 24894, 24895, 24896 | 24893 | 24894, 24895, 24896 |
| 69.9-70.0 | 24899, 24900, 24901, 24902 | 24899 | 24900, 24901, 24902 |
| 70.0-70.1 | 24905, 24906, 24907, 24908 | 24905 | 24906, 24907, 24908 |
| 70.1-70.2 | 24911, 24912, 24913, 24914 | 24911 | 24912, 24913, 24914 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 70.2-70.3 | 24917, 24918, 24919 | 24917 | 24918, 24919 |
| 70.3-70.4 | 24922, 24923, 24924, 24925 | 24922 | 24923, 24924, 24925 |
| 70.4-70.5 | 24928, 24929, 24930, 24931 | 24928 | 24929, 24930, 24931 |
| 70.5-70.6 | 24934, 24935, 24936, 24937 | 24934 | 24935, 24936, 24937 |
| 70.6-70.7 | 24940, 24941, 24942, 24943 | 24940 | 24941, 24942, 24943 |
| 70.7-70.8 | 24946, 24947, 24948 | 24946 | 24947, 24948 |
| 70.8-70.9 | 24951, 24952, 24953, 24954 | 24951 | 24952, 24953, 24954 |
| 70.9-71.0 | 24957, 24958, 24959, 24960 | 24957 | 24958, 24959, 24960 |

**Table 3 Global synchronization numbers of the shared spectrum and the non-shared spectrum when the frequency band is 57 GHz to 71 GHz, the synchronization raster granularity is 17.28 MHz, and the subcarrier spacing of the SSB is 120 kHz**

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 57.0-57.1 | 24153, 24154, 24155, 24156 | 24156 | 24153, 24154, 24155 |
| 57.1-57.2 | 24159, 24160, 24161 | 24161 | 24159, 24160 |
| 57.2-57.3 | 24164, 24165, 24166, 24167 | 24167 | 24164, 24165, 24166 |
| 57.3-57.4 | 24170, 24171, 24172, 24173 | 24173 | 24170, 24171, 24172 |
| 57.4-57.5 | 24176, 24177, 24178, 24179 | 24179 | 24176, 24177, 24178 |
| 57.5-57.6 | 24182, 24183, 24184 | 24184 | 24182, 24183 |
| 57.6-57.7 | 24187, 24188, 24189, 24190 | 24190 | 24187, 24188, 24189 |
| 57.7-57.8 | 24193, 24194, 24195, 24196 | 24196 | 24193, 24194, 24195 |
| 57.8-57.9 | 24199, 24200, 24201, 24202 | 24199 | 24199, 24200, 24201 |
| 57.9-58.0 | 24205, 24206, 24207, 24208 | 24208 | 24205, 24206, 24207 |
| 58.0-58.1 | 24211, 24212, 24213 | 24213 | 24211, 24212 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 58.1-58.2 | 24216, 24217, 24218, 24219 | 24219 | 24216, 24217, 24218 |
| 58.2-58.3 | 24222, 24223, 24224, 24225 | 24225 | 24222, 24223, 24224 |
| 58.3-58.4 | 24228, 24229, 24230, 24231 | 24231 | 24228, 24229, 24230 |
| 58.4-58.5 | 24234, 24235, 24236, 24237 | 24237 | 24234, 24235, 24236 |
| 58.5-58.6 | 24240, 24241, 24242, 24243 | 24243 | 24240, 24241, 24242 |
| 58.6-58.7 | 24245, 24246, 24247, 24248 | 24248 | 24245, 24246, 24247 |
| 58.7-58.8 | 24251, 24252, 24253, 24254 | 24254 | 24251, 24252, 24253 |
| 58.8-58.9 | 24257, 24258, 24259, 24260 | 24260 | 24257, 24258, 24259 |
| 58.9-59.0 | 24263, 24264, 24265, 24266 | 24266 | 24263, 24264, 24265 |
| 59.0-59.1 | 24268, 24267, 24268, 24269 | 24269 | 24268, 24267, 24268 |
| 59.1-59.2 | 24274, 24275, 24276, 24277 | 24277 | 24274, 24275, 24276 |
| 59.2-59.3 | 24280, 24281, 24282, 24283 | 24283 | 24280, 24281, 24282 |
| 59.3-59.4 | 24286, 24287, 24288, 24289 | 24289 | 24286, 24287, 24288 |
| 59.4-59.5 | 24292, 24293, 24294 | 24294 | 24292, 24293 |
| 59.5-59.6 | 24297, 24298, 24299, 24300 | 24300 | 24297, 24298, 24299 |
| 59.6-59.7 | 24303, 24304, 24305, 24306 | 24306 | 24303, 24304, 24305 |
| 59.7-59.8 | 24309, 24310, 24311, 24312 | 24312 | 24309, 24310, 24311 |
| 59.8-59.9 | 24315, 24316, 24317, 24318 | 24318 | 24315, 24316, 24317 |
| 59.9-60.0 | 24321, 24322, 24323 | 24323 | 24321, 24322 |
| 60.0-60.1 | 24326, 24327, 24328, 24329 | 24329 | 24326, 24327, 24328 |
| 60.1-60.2 | 24332, 24333, 24334, 24335 | 24335 | 24332, 24333, 24334 |
| 60.2-60.3 | 24338, 24339, 24340, 24341 | 24341 | 24338, 24339, 24340 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 60.3-60.4 | 24344, 24345, 24346, 24347 | 24347 | 24344, 24345, 24346 |
| 60.4-60.5 | 24349, 24350, 24351, 24352 | 24352 | 24349, 24350, 24351 |
| 60.5-60.6 | 24355, 24356, 24357, 24358 | 24358 | 24355, 24356, 24357 |
| 60.6-60.7 | 24361, 24362, 24363, 24364 | 24364 | 24361, 24362, 24363 |
| 60.7-60.8 | 24367, 24368, 24369, 24370 | 24370 | 24367, 24368, 24369 |
| 60.8-60.9 | 24373, 24374, 24375 | 24375 | 24373, 24374 |
| 60.9-61.0 | 24378, 24379, 24380, 24381 | 24381 | 24378, 24379, 24380 |
| 61.0-61.1 | 24384, 24385, 24386, 24387 | 24387 | 24384, 24385, 24386 |
| 61.1-61.2 | 24390, 24391, 24392, 24393 | 24393 | 24390, 24391, 24392 |
| 61.2-61.3 | 24396, 24397, 24398, 24399 | 24399 | 24396, 24397, 24398 |
| 61.3-61.4 | 24402, 24403, 24404 | 24404 | 24402, 24403 |
| 61.4-61.5 | 24407, 24408, 24409, 24410 | 24410 | 24407, 24408, 24409 |
| 61.5-61.6 | 24413, 24414, 24415, 24416 | 24416 | 24413, 24414, 24415 |
| 61.6-61.7 | 24419, 24420, 24421, 24422 | 24422 | 24419, 24420, 24421 |
| 61.7-61.8 | 24425, 24426, 24427, 24428 | 24428 | 24425, 24426, 24427 |
| 61.8-61.9 | 24431, 24432, 24433 | 24433 | 24431, 24432 |
| 61.9-62.0 | 24436, 24437, 24438, 24439 | 24439 | 24436, 24437, 24438 |
| 62.0-62.1 | 24442, 24443, 24444, 24445 | 24445 | 24442, 24443, 24444 |
| 62.1-62.2 | 24448, 24449, 24450, 24451 | 24451 | 24448, 24449, 24450 |
| 62.2-62.3 | 24454, 24455, 24456 | 24456 | 24454, 24455 |
| 62.3-62.4 | 24459, 24460, 24461, 24462 | 24462 | 24459, 24460, 24461 |
| 62.4-62.5 | 24465, 24466, 24467, 24468 | 24468 | 24465, 24466, 24467 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 62.5-62.6 | 24471, 24472, 24473, 24474 | 24474 | 24471, 24472, 24473 |
| 62.6-62.7 | 24477, 24478, 24479, 24480 | 24480 | 24477, 24478, 24479 |
| 62.7-62.8 | 24483, 24484, 24485 | 24485 | 24483, 24484 |
| 62.8-62.9 | 24488, 24489, 24490, 24491 | 24491 | 24488, 24489, 24490 |
| 62.9-63.0 | 24494, 24495, 24496, 24497 | 24497 | 24494, 24495, 24496 |
| 63.0-63.1 | 24500, 24501, 24502, 24503 | 24503 | 24497, 24501, 24502 |
| 63.1-63.2 | 24506, 24507, 24508, 24509 | 24509 | 24506, 24507, 24508 |
| 63.2-63.3 | 24512, 24513, 24514 | 24514 | 24512, 24513 |
| 63.3-63.4 | 24517, 24518, 24519, 24520 | 24520 | 24517, 24518, 24519 |
| 63.4-63.5 | 24523, 24524, 24525, 24526 | 24526 | 24523, 24524, 24525 |
| 63.5-63.6 | 24529, 24530, 24531, 24532 | 24532 | 24529, 24530, 24531 |
| 63.6-63.7 | 24535, 24536, 24537, 24538 | 24538 | 24535, 24536, 24537 |
| 63.7-63.8 | 24540, 24541, 24542, 24543 | 24543 | 24540, 24541, 24542 |
| 63.8-63.9 | 24546, 24547, 24548, 24549 | 24549 | 24546, 24547, 24548 |
| 63.9-64.0 | 24552, 24553, 24554, 24555 | 24555 | 24552, 24553, 24554 |
| 64.0-64.1 | 24558, 24559, 24560, 24561 | 24561 | 24558, 24559, 24560 |
| 64.1-64.2 | 24564, 24565, 24566 | 24566 | 24564, 24565 |
| 64.2-64.3 | 24569, 24570, 24571, 24572 | 24572 | 24569, 24570, 24571 |
| 64.3-64.4 | 24575, 24576, 24577, 24578 | 24578 | 24575, 24576, 24577 |
| 64.4-64.5 | 24581, 24582, 24583, 24584 | 24584 | 24581, 24582, 24583 |
| 64.5-64.6 | 24587, 24588, 24599, 24600 | 24600 | 24587, 24588, 24599 |
| 64.6-64.7 | 24593, 24594, 24595 | 24595 | 24593, 24594 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 64.7-64.8 | 24598, 24599, 24600, 24601 | 24601 | 24598, 24599, 24600 |
| 64.8-64.9 | 24604, 24605, 24606, 24607 | 24607 | 24604, 24605, 24606 |
| 64.9-65.0 | 24610, 24611, 24612, 24613 | 24613 | 24610, 24611, 24612 |
| 65.0-65.1 | 24616, 24617, 24618, 24619 | 24619 | 24616, 24617, 24618 |
| 65.1-65.2 | 24621, 24622, 24623, 24624 | 24624 | 24621, 24622, 24623 |
| 65.2-65.3 | 24627, 24628, 24628, 24630 | 24630 | 24627, 24628, 24628 |
| 65.3-65.4 | 24633, 24634, 24635, 24636 | 24636 | 24633, 24634, 24635 |
| 65.4-65.5 | 24639, 24640, 24641, 24642 | 24642 | 24639, 24640, 24641 |
| 65.5-65.6 | 24645, 24646, 24647 | 24647 | 24645, 24646 |
| 65.6-65.7 | 24650, 24651, 24652, 24653 | 24653 | 24650, 24651, 24652 |
| 65.7-65.8 | 24656, 24657, 24658, 24659 | 24659 | 24656, 24657, 24658 |
| 65.8-65.9 | 24662, 24663, 24664, 24665 | 24665 | 24662, 24663, 24664 |
| 65.9-66.0 | 24668, 24669, 24670, 24671 | 24671 | 24668, 24669, 24670 |
| 66.0-66.1 | 24674, 24675, 24676 | 24676 | 24674, 24675 |
| 66.1-66.2 | 24679, 24680, 24681, 24682 | 24682 | 24679, 24680, 24681 |
| 66.2-66.3 | 24685, 24686, 24687, 24688 | 24688 | 24685, 24686, 24687 |
| 66.3-66.4 | 24691, 24692, 24693, 24694 | 24694 | 24691, 24692, 24693 |
| 66.4-66.5 | 24697, 24698, 24699, 24700 | 24700 | 24697, 24698, 24699 |
| 66.5-66.6 | 24702, 24703, 24704, 24705 | 24705 | 24702, 24703, 24704 |
| 66.6-66.7 | 24708, 24709, 24710, 24711 | 24711 | 24708, 24709, 24710 |
| 66.7-66.8 | 24714, 24715, 24716, 24717 | 24717 | 24714, 24715, 24716 |
| 66.8-66.9 | 24720, 24721, 24722, 24723 | 24723 | 24720, 24721, 24722 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 66.9-67.0 | 24726, 24727, 24728 | 24728 | 24726, 24727 |
| 67.0-67.1 | 24731, 24732, 24733, 24734 | 24734 | 24731, 24732, 24733 |
| 67.1-67.2 | 24737, 24738, 24739, 24740 | 24740 | 24737, 24738, 24739 |
| 67.2-67.3 | 24743, 24744, 24745, 24746 | 24746 | 24743, 24744, 24745 |
| 67.3-67.4 | 24749, 24750, 24751, 24752 | 24752 | 24749, 24750, 24751 |
| 67.4-67.5 | 24755, 24756, 24757 | 24757 | 24755, 24756 |
| 67.5-67.6 | 24760, 24761, 24762, 24763 | 24763 | 24760, 24761, 24762 |
| 67.6-67.7 | 24766, 24767, 24768, 24769 | 24769 | 24766, 24767, 24768 |
| 67.7-67.8 | 24772, 24773, 24774, 24775 | 24775 | 24772, 24773, 24774 |
| 67.8-67.9 | 24778, 24779, 24780, 24781 | 24781 | 24778, 24779, 24780 |
| 67.9-68.0 | 24783, 24784, 24785, 24786 | 24786 | 24783, 24784, 24785 |
| 68.0-68.1 | 24789, 24790, 24791, 24792 | 24792 | 24789, 24790, 24791 |
| 68.1-68.2 | 24795, 24796, 24797, 24798 | 24798 | 24795, 24796, 24797 |
| 68.2-68.3 | 24801, 24802, 24803, 24804 | 24804 | 24801, 24802, 24803 |
| 68.3-68.4 | 24807, 24808, 24809 | 24810 | 24807, 24808 |
| 68.4-68.5 | 24812, 24813, 24814, 24815 | 24815 | 24812, 24813, 24814 |
| 68.5-68.6 | 24818, 24819, 24820, 24821 | 24821 | 24818, 24819, 24820 |
| 68.6-68.7 | 24824, 24825, 24826, 24827 | 24827 | 24824, 24825, 24826 |
| 68.7-68.8 | 24830, 24831, 24832, 24833 | 24833 | 24830, 24831, 24832 |
| 68.8-68.9 | 24836, 24837, 24838 | 24838 | 24836, 24837 |
| 68.9-69.0 | 24841, 24842, 24843, 24844 | 24844 | 24841, 24842, 24843 |
| 69.0-69.1 | 24847, 24848, 24849, 24850 | 24850 | 24847, 24848, 24849 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 69.1-69.2 | 24853, 24854, 24855, 24856 | 24856 | 24853, 24854, 24855 |
| 69.2-69.3 | 24859, 24860, 24861, 24862 | 24862 | 24859, 24860, 24861 |
| 69.3-69.4 | 24864, 24865, 24866, 24867 | 24867 | 24864, 24865, 24866 |
| 69.4-69.5 | 24870, 24871, 24872, 24873 | 24873 | 24870, 24871, 24872 |
| 69.5-69.6 | 24876, 24877, 24878, 24879 | 24879 | 24876, 24877, 24878 |
| 69.6-69.7 | 24882, 24883, 24884, 24885 | 24885 | 24882, 24883, 24884 |
| 69.7-69.8 | 24888, 24889, 24890, 24891 | 24891 | 24888, 24889, 24890 |
| 69.8-69.9 | 24893, 24894, 24895, 24896 | 24896 | 24893, 24894, 24895 |
| 69.9-70.0 | 24899, 24900, 24901, 24902 | 24902 | 24899, 24900, 24901 |
| 70.0-70.1 | 24905, 24906, 24907, 24908 | 24908 | 24905, 24906, 24907 |
| 70.1-70.2 | 24911, 24912, 24913, 24914 | 24914 | 24911, 24912, 24913 |
| 70.2-70.3 | 24917, 24918, 24919 | 24919 | 24917, 24918 |
| 70.3-70.4 | 24922, 24923, 24924, 24925 | 24925 | 24922, 24923, 24924 |
| 70.4-70.5 | 24928, 24929, 24930, 24931 | 24931 | 24928, 24929, 24930 |
| 70.5-70.6 | 24934, 24935, 24936, 24937 | 24937 | 24934, 24935, 24936 |
| 70.6-70.7 | 24940, 24941, 24942, 24943 | 24943 | 24940, 24941, 24942 |
| 70.7-70.8 | 24946, 24947, 24948 | 24948 | 24946, 24947 |
| 70.8-70.9 | 24951, 24952, 24953, 24954 | 24954 | 24951, 24952, 24953 |
| 70.9-71.0 | 24957, 24958, 24959, 24960 | 24960 | 24957, 24958, 24959 |

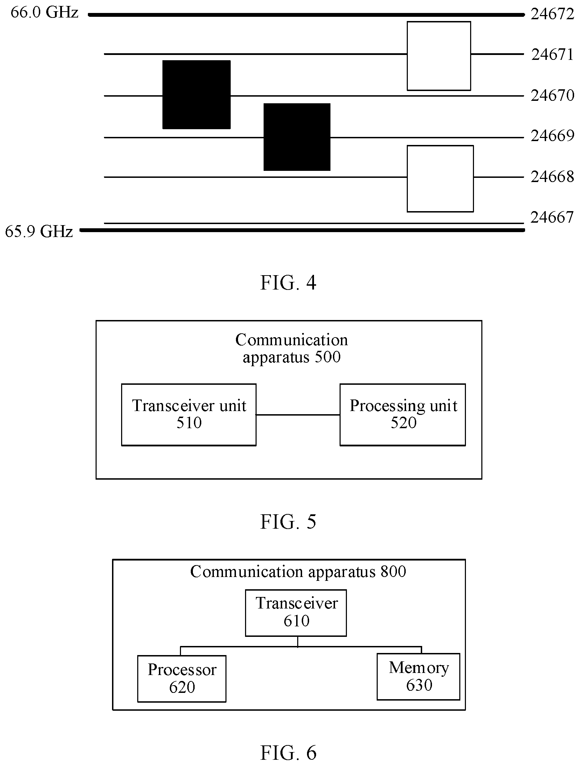

By way of example, and not limitation, the frequency range corresponding to the first bandwidth is 63.9 GHz to 64.0 GHz. According to the foregoing design, a synchronization raster with a largest global synchronization number and a synchronization raster with a smallest global synchronization number in the first bandwidth are global synchronization numbers of the shared spectrum, and the other synchronization rasters are global synchronization numbers of the non-shared spectrum. FIG. 4 is an example of this design method. SSBs corresponding to terminal devices of the shared spectrum are sent on synchronization rasters with global synchronization numbers 24668 and 24671, and SSBs corresponding to terminal devices of the non-shared spectrum are sent on synchronization rasters with global synchronization numbers 24669 and 24670. 24667 is a synchronization raster that does not meet a condition, to be specific, cannot correspond to one complete SSB in the frequency range of the first bandwidth. It should be noted that, this may also be a reverse case. Alternatively, a synchronization raster with a largest global synchronization number in the first bandwidth is the synchronization raster of the shared spectrum, or a synchronization raster with a smallest global synchronization number in the first bandwidth is the synchronization raster of the shared spectrum, and the other synchronization rasters are the synchronization rasters of the non-shared spectrum, or the foregoing case is reverse. It should be understood that the network device only needs to specify one placement rule, and publish the rule to the terminal device, so that the terminal device can determine, in the method provided in this embodiment, that a found SSB is an SSB corresponding to the non-shared spectrum or an SSB corresponding to the shared spectrum.

The following Table 4 shows a synchronization raster design when the synchronization raster granularity is 34.56 MHz. The global synchronization number of the shared spectrum is a smallest global synchronization number in the first bandwidth, and the global synchronization number of the non-shared spectrum is the other global synchronization number in the first bandwidth. It should be noted that the global synchronization number of the non-shared spectrum may alternatively be a smallest global synchronization number in the first bandwidth, and the global synchronization number of the shared spectrum may be the other global synchronization number in the first bandwidth.

It should be noted that, when the synchronization raster granularity is increased to twice the original granularity, the global synchronization number remains unchanged, and a search granularity is changed from searching every number to searching every other number. In an example, as shown in Table 5, it should be understood that when the first bandwidth corresponds to 57.0 GHz to 57.1 GHz, all global synchronization numbers may alternatively be 24154 and 24156 provided that the first formula is met. The global synchronization number of the shared spectrum may be 24154, the global synchronization number of the non-shared spectrum may be 24156, or vice versa. This is not limited in this application.

**Table 4 Global synchronization numbers of the non-shared spectrum and the shared spectrum when the frequency band is 57 GHz to 71 GHz, the synchronization raster granularity is 34.56 MHz, and the subcarrier spacing of the SSB is 120 kHz**

| Bandwidth (GHz) | All global synchronization numbers Sync raster | Global synchronization number of the shared spectrum Sync raster | Global synchronization number of the non-shared spectrum Sync raster |
|---|---|---|---|
| 57.0-57.1 | 24153, 24155 | 24153 | 24155 |
| 57.1-57.2 | 24159, 24161 | 24159 | 24161 |
| 57.2-57.3 | 24164, 24166 | 24164 | 24166 |
| 57.3-57.4 | 24170, 24172 | 24170 | 24172 |
| 57.4-57.5 | 24176, 24178 | 24176 | 24178 |
| 57.5-57.6 | 24182, 24184 | 24182 | 24184 |
| 57.6-57.7 | 24187, 24189 | 24187 | 24189 |
| 57.7-57.8 | 24193, 24195 | 24193 | 24195 |
| 57.8-57.9 | 24199, 24201 | 24199 | 24201 |
| 57.9-58.0 | 24205, 24207 | 24205 | 24207 |
| 58.0-58.1 | 24211, 24213 | 24211 | 24213 |
| 58.1-58.2 | 24216, 24218 | 24216 | 24218 |
| 58.2-58.3 | 24222, 24224 | 24222 | 24224 |
| 58.3-58.4 | 24228, 24230 | 24228 | 24230 |
| 58.4-58.5 | 24234, 24236 | 24234 | 24236 |
| 58.5-58.6 | 24240, 24242 | 24240 | 24242 |
| 58.6-58.7 | 24245, 24247 | 24245 | 24247 |
| 58.7-58.8 | 24251, 24253 | 24251 | 24253 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 58.8-58.9 | 24257, 24259 | 24257 | 24259 |
| 58.9-59.0 | 24263, 24265 | 24263 | 24265 |
| 59.0-59.1 | 24268, 24270 | 24268 | 24270 |
| 59.1-59.2 | 24274, 24276 | 24274 | 24276 |
| 59.2-59.3 | 24280, 24282 | 24280 | 24282 |
| 59.3-59.4 | 24286, 24288 | 24286 | 24288 |
| 59.4-59.5 | 24292, 24294 | 24292 | 24294 |
| 59.5-59.6 | 24297, 24299 | 24297 | 24299 |
| 59.6-59.7 | 24303, 24305 | 24303 | 24305 |
| 59.7-59.8 | 24309, 24311 | 24309 | 24311 |
| 59.8-59.9 | 24315, 24317 | 24315 | 24317 |
| 59.9-60.0 | 24321, 24323 | 24321 | 24323 |
| 60.0-60.1 | 24326, 24328 | 24326 | 24328 |
| 60.1-60.2 | 24332, 24334 | 24332 | 24334 |
| 60.2-60.3 | 24338, 24340 | 24338 | 24340 |
| 60.3-60.4 | 24344, 24346 | 24344 | 24346 |
| 60.4-60.5 | 24349, 24351 | 24349 | 24351 |
| 60.5-60.6 | 24355, 24357 | 24355 | 24357 |
| 60.6-60.7 | 24361, 24363 | 24361 | 24363 |
| 60.7-60.8 | 24367, 24369 | 24367 | 24369 |
| 60.8-60.9 | 24373, 24375 | 24373 | 24375 |
| 60.9-61.0 | 24378, 24380 | 24378 | 24380 |
| 61.0-61.1 | 24384, 24386 | 24384 | 24386 |
| 61.1-61.2 | 24390, 24392 | 24390 | 24392 |
| 61.2-61.3 | 24396, 24398 | 24396 | 24398 |
| 61.3-61.4 | 24402, 24404 | 24402 | 24404 |
| 61.4-61.5 | 24407, 24409 | 24407 | 24409 |
| 61.5-61.6 | 24413, 24415 | 24413 | 24415 |
| 61.6-61.7 | 24419, 24421 | 24419 | 24421 |
| 61.7-61.8 | 24425, 24427 | 24425 | 24427 |
| 61.8-61.9 | 24431, 24433 | 24431 | 24433 |
| 61.9-62.0 | 24436, 24438 | 24436 | 24438 |
| 62.0-62.1 | 24442, 24444 | 24442 | 24444 |
| 62.1-62.2 | 24448, 24450 | 24448 | 24450 |
| 62.2-62.3 | 24454, 24456 | 24454 | 24456 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 62.3-62.4 | 24459, 24461 | 24459 | 24461 |
| 62.4-62.5 | 24465, 24467 | 24465 | 24467 |
| 62.5-62.6 | 24471, 24473 | 24471 | 24473 |
| 62.6-62.7 | 24477, 24480 | 24477 | 24480 |
| 62.7-62.8 | 24483, 24485 | 24483 | 24485 |
| 62.8-62.9 | 24488, 24490 | 24488 | 24490 |
| 62.9-63.0 | 24494, 24496 | 24494 | 24496 |
| 63.0-63.1 | 24500, 24502 | 24500 | 24502 |
| 63.1-63.2 | 24506, 24508 | 24506 | 24508 |
| 63.2-63.3 | 24512, 24514 | 24512 | 24514 |
| 63.3-63.4 | 24518, 24519 | 24518 | 24519 |
| 63.4-63.5 | 24523, 24525 | 24523 | 24525 |
| 63.5-63.6 | 24529, 24531 | 24529 | 24531 |
| 63.6-63.7 | 24535, 24537 | 24535 | 24537 |
| 63.7-63.8 | 24540, 24542 | 24540 | 24542 |
| 63.8-63.9 | 24546, 24548 | 24546 | 24548 |
| 63.9-64.0 | 24552, 24554 | 24552 | 24554 |
| 64.0-64.1 | 24558, 24560 | 24558 | 24560 |
| 64.1-64.2 | 24564, 24566 | 24564 | 24566 |
| 64.2-64.3 | 24569, 24571 | 24569 | 24571 |
| 64.3-64.4 | 24575, 24577 | 24575 | 24577 |
| 64.4-64.5 | 24581, 24583 | 24581 | 24583 |
| 64.5-64.6 | 24587, 24589 | 24587 | 24589 |
| 64.6-64.7 | 24593, 24595 | 24593 | 24595 |
| 64.7-64.8 | 24598, 24600 | 24598 | 24600 |
| 64.8-64.9 | 24604, 24606 | 24604 | 24606 |
| 64.9-65.0 | 24610, 24612 | 24610 | 24612 |
| 65.0-65.1 | 24616, 24618 | 24616 | 24618 |
| 65.1-65.2 | 24621, 24623 | 24621 | 24623 |
| 65.2-65.3 | 24627, 24629 | 24627 | 24629 |
| 65.3-65.4 | 24633, 24635 | 24633 | 24635 |
| 65.4-65.5 | 24639, 24641 | 24639 | 24641 |
| 65.5-65.6 | 24645, 24647 | 24645 | 24647 |
| 65.6-65.7 | 24650, 24652 | 24650 | 24652 |
| 65.7-65.8 | 24656, 24658 | 24656 | 24658 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 65.8-65.9 | 24662, 24664 | 24662 | 24664 |
| 65.9-66.0 | 24668, 24670 | 24668 | 24670 |
| 66.0-66.1 | 24674, 24676 | 24674 | 24676 |
| 66.1-66.2 | 24679, 24681 | 24679 | 24681 |
| 66.2-66.3 | 24685, 24687 | 24685 | 24687 |
| 66.3-66.4 | 24691, 24693 | 24691 | 24693 |
| 66.4-66.5 | 24697, 24699 | 24697 | 24699 |
| 66.5-66.6 | 24702, 24704 | 24702 | 24704 |
| 66.6-66.7 | 24708, 24710 | 24708 | 24710 |
| 66.7-66.8 | 24714, 24716 | 24714 | 24716 |
| 66.8-66.9 | 24720, 24722 | 24720 | 24722 |
| 66.9-67.0 | 24726, 24728 | 24726 | 24728 |
| 67.0-67.1 | 24731, 24733 | 24731 | 24733 |
| 67.1-67.2 | 24737, 24739 | 24737 | 24739 |
| 67.2-67.3 | 24743, 24745 | 24743 | 24745 |
| 67.3-67.4 | 24749, 24751 | 24749 | 24751 |
| 67.4-67.5 | 24755, 24757 | 2475 | 24757 |
| 67.5-67.6 | 24760, 24762 | 24760 | 24762 |
| 67.6-67.7 | 24766, 24768 | 24766 | 24768 |
| 67.7-67.8 | 24772, 24774 | 24772 | 24774 |
| 67.8-67.9 | 24778, 24780 | 24778 | 24780 |
| 67.9-68.0 | 24783, 24785 | 24783 | 24785 |
| 68.0-68.1 | 24789, 24791 | 24789 | 24791 |
| 68.1-68.2 | 24795, 24797 | 24795 | 24797 |
| 68.2-68.3 | 24801, 24803 | 24801 | 24803 |
| 68.3-68.4 | 24807, 24810 | 24807 | 24810 |
| 68.4-68.5 | 24812, 24814 | 24812 | 24814 |
| 68.5-68.6 | 24818, 24820 | 24818 | 24820 |
| 68.6-68.7 | 24824, 24826 | 24824 | 24826 |
| 68.7-68.8 | 24830, 24832 | 24830 | 24832 |
| 68.8-68.9 | 24836, 24838 | 24836 | 24838 |
| 68.9-69.0 | 24841, 24843 | 24841 | 24843 |
| 69.0-69.1 | 24847, 24849 | 24847 | 24849 |
| 69.1-69.2 | 24853, 24855 | 24853 | 24855 |
| 69.2-69.3 | 24859, 24861 | 24859 | 24861 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 69.3-69.4 | 24864, 24866 | 24864 | 24866 |
| 69.4-69.5 | 24870, 24872 | 24870 | 24872 |
| 69.5-69.6 | 24876, 24878 | 24876 | 24878 |
| 69.6-69.7 | 24882, 24884 | 24882 | 24884 |
| 69.7-69.8 | 24888, 24890 | 24888 | 24890 |
| 69.8-69.9 | 24893, 24895 | 24893 | 24895 |
| 69.9-70.0 | 24899, 24901 | 24899 | 24901 |
| 70.0-70.1 | 24905, 24907 | 24905 | 24907 |
| 70.1-70.2 | 24911, 24913 | 24911 | 24913 |
| 70.2-70.3 | 24917, 24919 | 24917 | 24919 |
| 70.3-70.4 | 24922, 24924 | 24922 | 24924 |
| 70.4-70.5 | 24928, 24930 | 24928 | 24930 |
| 70.5-70.6 | 24934, 24936 | 24934 | 24936 |
| 70.6-70.7 | 24940, 24942 | 24940 | 24942 |
| 70.7-70.8 | 24946, 24948 | 24946 | 24948 |
| 70.8-70.9 | 24951, 24953 | 24951 | 24953 |
| 70.9-71.0 | 24957, 24959 | 24957 | 24959 |

**Table 5 Global synchronization numbers of the non-shared spectrum and the shared spectrum when the frequency band is 57 GHz to 71 GHz, the synchronization raster granularity is 34.56 MHz, and the subcarrier spacing of the SSB is 120 kHz**

| Bandwidth (GHz) | All global synchronization numbers Sync raster | Global synchronization number of the shared spectrum Sync raster | Global synchronization number of the non-shared spectrum Sync raster |
|---|---|---|---|
| 57.0-57.1 | 24154, 24156 | 24154 | 24156 |
| 57.1-57.2 | 24159, 24161 | 24159 | 24161 |
| 57.2-57.3 | 24165, 24167 | 24165 | 24167 |
| 57.3-57.4 | 24171, 24173 | 24171 | 24173 |
| 57.4-57.5 | 24177, 24179 | 24177 | 24179 |
| 57.5-57.6 | 24182, 24184 | 24182 | 24184 |
| 57.6-57.7 | 24188, 24190 | 24188 | 24190 |
| 57.7-57.8 | 24194, 24196 | 24194 | 24196 |
| 57.8-57.9 | 24200, 24202 | 24200 | 24202 |
| 57.9-58.0 | 24206, 24208 | 24206 | 24208 |
| 58.0-58.1 | 24211, 24213 | 24211 | 24213 |
| 58.1-58.2 | 24217, 24219 | 24217 | 24219 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 58.2-58.3 | 24223, 24225 | 24223 | 24225 |
| 58.3-58.4 | 24229, 24231 | 24229 | 24231 |
| 58.4-58.5 | 24235, 24237 | 24235 | 24237 |
| 58.5-58.6 | 24241, 24243 | 24241 | 24243 |
| 58.6-58.7 | 24246, 24248 | 24246 | 24248 |
| 58.7-58.8 | 24252, 24254 | 24252 | 24254 |
| 58.8-58.9 | 24258, 24260 | 24258 | 24260 |
| 58.9-59.0 | 24264, 24266 | 24264 | 24266 |
| 59.0-59.1 | 24267, 24269 | 24267 | 24269 |
| 59.1-59.2 | 24275, 24277 | 24275 | 24277 |
| 59.2-59.3 | 24281, 24283 | 24281 | 24283 |
| 59.3-59.4 | 24287, 24289 | 24287 | 24289 |
| 59.4-59.5 | 24292, 24294 | 24292 | 24294 |
| 59.5-59.6 | 24298, 24300 | 24298 | 24300 |
| 59.6-59.7 | 24304, 24306 | 24304 | 24306 |
| 59.7-59.8 | 24310, 24312 | 24310 | 24312 |
| 59.8-59.9 | 24316, 24318 | 24316 | 24318 |
| 59.9-60.0 | 24321, 24323 | 24321 | 24323 |
| 60.0-60.1 | 24327, 24329 | 24327 | 24329 |
| 60.1-60.2 | 24333, 24335 | 24333 | 24335 |
| 60.2-60.3 | 24339, 24341 | 24339 | 24341 |
| 60.3-60.4 | 24345, 24347 | 24345 | 24347 |
| 60.4-60.5 | 24350, 24352 | 24350 | 24352 |
| 60.5-60.6 | 24356, 24358 | 24355, 24358 | 24356, 24357 |
| 60.6-60.7 | 24362, 24364 | 24361, 24364 | 24362, 24363 |
| 60.7-60.8 | 24368, 24370 | 24368 | 24370 |
| 60.8-60.9 | 24373, 24375 | 24373 | 24375 |
| 60.9-61.0 | 24379, 24381 | 24379 | 24381 |
| 61.0-61.1 | 24385, 24387 | 24385 | 24387 |
| 61.1-61.2 | 24391, 24393 | 24391 | 24393 |
| 61.2-61.3 | 24397, 24399 | 24397 | 24399 |
| 61.3-61.4 | 24402, 24404 | 24402 | 24404 |
| 61.4-61.5 | 24408, 24410 | 24408 | 24410 |
| 61.5-61.6 | 24414, 24416 | 24414 | 24416 |
| 61.6-61.7 | 24420, 24422 | 24420 | 24422 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 61.7-61.8 | 24426, 24428 | 24426 | 24428 |
| 61.8-61.9 | 24431, 24433 | 24431 | 24433 |
| 61.9-62.0 | 24437, 24439 | 24437 | 24439 |
| 62.0-62.1 | 24443, 24445 | 24443 | 24445 |
| 62.1-62.2 | 24449, 24451 | 24449 | 24451 |
| 62.2-62.3 | 24454, 24456 | 24454 | 24456 |
| 62.3-62.4 | 24460, 24462 | 24460 | 24462 |
| 62.4-62.5 | 24466, 24468 | 24466 | 24468 |
| 62.5-62.6 | 24472, 24474 | 24472 | 24474 |
| 62.6-62.7 | 24478, 24480 | 24478 | 24480 |
| 62.7-62.8 | 24483, 24485 | 24483 | 24485 |
| 62.8-62.9 | 24489, 24491 | 24489 | 24491 |
| 62.9-63.0 | 24495, 24497 | 24495 | 24497 |
| 63.0-63.1 | 24501, 24503 | 24501 | 24503 |
| 63.1-63.2 | 24507, 24509 | 24507 | 24509 |
| 63.2-63.3 | 24512, 24514 | 24512 | 24514 |
| 63.3-63.4 | 24518, 24520 | 24518 | 24520 |
| 63.4-63.5 | 24524, 24526 | 24524 | 24526 |
| 63.5-63.6 | 24530, 24532 | 24530 | 24532 |
| 63.6-63.7 | 24536, 24538 | 24536 | 24538 |
| 63.7-63.8 | 24541, 24543 | 24541 | 24543 |
| 63.8-63.9 | 24547, 24549 | 24547 | 24549 |
| 63.9-64.0 | 24553, 24555 | 24553 | 24555 |
| 64.0-64.1 | 24559, 24561 | 24559 | 24561 |
| 64.1-64.2 | 24564, 24566 | 24564 | 24566 |
| 64.2-64.3 | 24570, 24572 | 24570 | 24572 |
| 64.3-64.4 | 24576, 24578 | 24576 | 24578 |
| 64.4-64.5 | 24582, 24584 | 24582 | 24584 |
| 64.5-64.6 | 24588, 24600 | 24588 | 24600 |
| 64.6-64.7 | 24593, 24595 | 24593 | 24595 |
| 64.7-64.8 | 24599, 24601 | 24599 | 24601 |
| 64.8-64.9 | 24605, 24607 | 24605 | 24607 |
| 64.9-65.0 | 24611, 24613 | 24611 | 24613 |
| 65.0-65.1 | 24617, 24619 | 24617 | 24619 |
| 65.1-65.2 | 24622, 24624 | 24622 | 24624 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 65.2-65.3 | 24628, 24630 | 24628 | 24630 |
| 65.3-65.4 | 24634, 24636 | 24634 | 24636 |
| 65.4-65.5 | 24640, 24642 | 24640 | 24642 |
| 65.5-65.6 | 24645, 24647 | 24645 | 24647 |
| 65.6-65.7 | 24651, 24653 | 24651 | 24653 |
| 65.7-65.8 | 24657, 24659 | 24657 | 24659 |
| 65.8-65.9 | 24663, 24665 | 24663 | 24665 |
| 65.9-66.0 | 24669, 24671 | 24669 | 24671 |
| 66.0-66.1 | 24674, 24676 | 24674 | 24676 |
| 66.1-66.2 | 24680, 24682 | 24680 | 24682 |
| 66.2-66.3 | 24686, 24688 | 24686 | 24688 |
| 66.3-66.4 | 24692, 24694 | 24692 | 24694 |
| 66.4-66.5 | 24698, 24700 | 24698 | 24700 |
| 66.5-66.6 | 24703, 24705 | 24703 | 24705 |
| 66.6-66.7 | 24709, 24711 | 24709 | 24711 |
| 66.7-66.8 | 24715, 24717 | 24715 | 24717 |
| 66.8-66.9 | 24721, 24723 | 24721 | 24723 |
| 66.9-67.0 | 24726, 24728 | 24726 | 24727 |
| 67.0-67.1 | 24732, 24734 | 24732 | 24734 |
| 67.1-67.2 | 24738, 24740 | 24738 | 24740 |
| 67.2-67.3 | 24744, 24746 | 24744 | 24746 |
| 67.3-67.4 | 24750, 24752 | 24750 | 24752 |
| 67.4-67.5 | 24755, 24757 | 24755 | 24757 |
| 67.5-67.6 | 24761, 24763 | 24761 | 24763 |
| 67.6-67.7 | 24767, 24769 | 24767 | 24769 |
| 67.7-67.8 | 24773, 24775 | 24773 | 24775 |
| 67.8-67.9 | 24779, 24781 | 24779 | 24781 |
| 67.9-68.0 | 24784, 24786 | 24784 | 24786 |
| 68.0-68.1 | 24790, 24792 | 24790 | 24792 |
| 68.1-68.2 | 24796, 24798 | 24796 | 24798 |
| 68.2-68.3 | 24802, 24804 | 24802 | 24804 |
| 68.3-68.4 | 24807, 24809 | 24807 | 24809 |
| 68.4-68.5 | 24813, 24815 | 24813 | 24815 |
| 68.5-68.6 | 24819, 24821 | 24819 | 24821 |
| 68.6-68.7 | 24825, 24827 | 24825 | 24827 |

(continued)

| Bandwidth (GHz) | All global synchronization numbers<br>Sync raster | Global synchronization number of the shared spectrum<br>Sync raster | Global synchronization number of the non-shared spectrum<br>Sync raster |
|---|---|---|---|
| 68.7-68.8 | 24831, 24833 | 24831 | 24833 |
| 68.8-68.9 | 24836, 24838 | 24836 | 24838 |
| 68.9-69.0 | 24842, 24844 | 24842 | 24844 |
| 69.0-69.1 | 24848, 24850 | 24848 | 24850 |
| 69.1-69.2 | 24854, 24856 | 24854 | 24856 |
| 69.2-69.3 | 24860, 24862 | 24860 | 24862 |
| 69.3-69.4 | 24865, 24867 | 24865 | 24867 |
| 69.4-69.5 | 24871, 24873 | 24871 | 24873 |
| 69.5-69.6 | 24877, 24879 | 24877 | 24879 |
| 69.6-69.7 | 24883, 24885 | 24883 | 24885 |
| 69.7-69.8 | 24889, 24891 | 24889 | 24891 |
| 69.8-69.9 | 24894, 24896 | 24894 | 24896 |
| 69.9-70.0 | 24900, 24902 | 24900 | 24902 |
| 70.0-70.1 | 24906, 24908 | 24906 | 24908 |
| 70.1-70.2 | 24912, 24914 | 24912 | 24914 |
| 70.2-70.3 | 24917, 24919 | 24917 | 24919 |
| 70.3-70.4 | 24923, 24925 | 24923 | 24925 |
| 70.4-70.5 | 24929, 24931 | 24929 | 24931 |
| 70.5-70.6 | 24935, 24937 | 24935 | 24937 |
| 70.6-70.7 | 24941, 24943 | 24941 | 24943 |
| 70.7-70.8 | 24946, 24948 | 24946 | 24948 |
| 70.8-70.9 | 24952, 24954 | 24952 | 24954 |
| 70.9-71.0 | 24958, 24960 | 24958 | 24960 |

It should be noted that Table 4 and Table 5 may be understood as searching for an SSB with a 240 kHz subcarrier spacing by using the synchronization raster granularity of 17.28 MHz, or may be understood as searching for an SSB with a 120 kHz subcarrier spacing by using the synchronization raster granularity of 34.56 MHz.

In some embodiments, according to the foregoing first rule, when the subcarrier spacing is 480 kHz, the network device determines that the first bandwidth is 400 MHz. In the frequency band above 52.6 GHz, global synchronization numbers determined according to the first formula and based on the first bandwidth are shown in Table 6, where the synchronization raster granularity is 17.28 MHz. An example in which the synchronization rasters of the shared spectrum are a synchronization raster with a smallest number and a synchronization raster with a largest number in the first bandwidth, and the other synchronization rasters are the synchronization rasters of the non-shared spectrum is used in Table 6. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. It should be noted that, alternatively, an example in which the synchronization raster of the shared spectrum is a synchronization raster with a smallest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. It should be noted that, alternatively, an example in which the synchronization raster of the shared spectrum is a synchronization raster with a largest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum.

It should be noted that the utilization rate of the first bandwidth cannot reach 100%. For example, the utilization rate of the bandwidth can only reach 95.04%. Therefore, within 400 MHz, a location of a largest synchronization raster in frequency domain is less than or equal to the 332.42th MHz in the bandwidth. Within 400 MHz, a location of a smallest synchronization raster in frequency domain is greater than or equal to the 67.46th MHz. It should be noted that in some embodiments, in the first bandwidth, one complete SSB can be placed on a synchronization raster corresponding to each global synchronization number. This is used as an example but is not limited in this application.

It should be noted that, when the first subcarrier spacing is 480 kHz, the corresponding SSB occupies a bandwidth of 115.2 MHz (that is, 480 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 57.6 MHz on both the upper side and the lower side of the synchronization raster.

It should be noted that the spectrum segment 52.6 GHz to 57 GHz is the non-shared spectrum for all countries. Therefore, only the synchronization raster design method in the frequency band range of 57 GHz to 71 GHz is provided herein.

**Table 6 Global synchronization numbers of the shared spectrum and the non-shared spectrum when the frequency band is 57 GHz to 66 GHz, the synchronization raster granularity is 17.28 MHz, and the subcarrier spacing of the SSB is 480 kHz**

| Bandwidth (GHz) | All global synchronization numbers<br>Sync raster | Global synchronization number of the shared spectrum<br>Sync raster | Global synchronization number of the non-shared spectrum<br><br>Sync raster |
|---|---|---|---|
| 56.8-57.2 | 24156-24158 | 24156, 24158 | 24157 |
| 57.2-57.6 | 24167-24182 | 24167, 24182 | 24168, 24169, 24170, 24171, 24172, 24173, 24174, 24175, 24176, 24177, 24178, 24179, 24180, 24181 |
| 57.6-58.0 | 24190-24205 | 24190, 24205 | 24191, 24192, 24193, 24194, 24195, 24196, 24197, 24198, 24199, 24200, 24201, 24202, 24203, 24204 |
| 58.0-58.4 | 24214-24228 | 24214, 24228 | 24215, 24216, 24217, 24218, 24219, 24220, 24221, 24222, 24223, 24224, 24225, 24226, 24227 |
| 58.4-58.8 | 24237-24251 | 24237, 24251 | 24238, 24239, 24240, 24241, 24242, 24243, 24244, 24245, 24246, 24247, 24248, 24249, 24250 |
| 58.8-59.2 | 24261-24274 | 24261, 24274 | 24261, 24262, 24263, 24264, 24265, 24266, 24267, 24268, 24269, 24270, 24271, 24272, 24273 |
| 59.2-59.6 | 24283-24297 | 24283, 24297 | 24284, 24285, 24286, 24287, 24288, 24289, 24290, 24291, 24292, 24293, 24294, 24295, 24296 |
| 59.6-60.0 | 24306-24320 | 24306, 24320 | 24307, 24308, 24309, 24310, 24311, 24312, 24313, 24314, 24315, 24316, 24317, 24318, 24319 |
| 60.0-60.4 | 24329-24344 | 24329, 24344 | 24330, 24331, 24332, 24333, 24334, 24335, 24336, 24337, 24338, 24339, 24340, 24341, 24342, 24343 |

(continued)

| Bandwidth (GHz) | All global synchronization numbers<br>Sync raster | Global synchronization number of the shared spectrum<br>Sync raster | Global synchronization number of the non-shared spectrum<br><br>Sync raster |
|---|---|---|---|
| 60.4-60.8 | 24352-24367 | 24352, 24367 | 24353, 24354, 24355, 24356, 24357, 24358, 24359, 24360, 24361, 24362, 24363, 24364, 24365, 24366 |
| 60.8-61.2 | 24376-24390 | 24376, 24390 | 24377, 24378, 24379, 24380, 24381, 24382, 24383, 24384, 24385, 24386, 24387, 24388, 24389 |
| 61.2-61.6 | 24399-24413 | 24399, 24413 | 21400, 21401, 21402, 21403, 21404, 21405, 21406, 21407, 21408, 21409, 21410, 21411, 21412 |
| 61.6-62.0 | 24422-24436 | 24422, 24436 | 24423, 24424, 24425, 24426, 24427, 24428, 24429, 24430, 24431, 24432, 24433, 24434, 24435 |
| 62.0-62.4 | 24445-24459 | 24445, 24459 | 24446, 24447, 24448, 24449, 24450, 24451, 24452, 24453, 24454, 24455, 24456, 24457 24458 |
| 62.4-62.8 | 24468-24482 | 24468, 24482 | 24469, 24470, 24471, 24472, 24473, 24474, 24475, 24476, 24477, 24478, 24479, 24480, 24481 |
| 62.8-63.2 | 24491-24506 | 24491, 24506 | 24492, 24493, 24494, 24495, 24496, 24497, 24498, 24499, 24500, 24501, 24502, 24503, 24504, 24505 |
| 63.2-63.6 | 24514-24529 | 24514, 24529 | 24515, 24516, 24517, 24518, 24519, 24520, 24521, 24522, 24523, 24524, 24525, 24526, 24527, 24528 |
| 63.6-64.0 | 24538-24552 | 24538, 24552 | 24539, 24540, 24541, 24542, 24543, 24544, 24545, 24546, 24547, 24548, 24549, 24550, 24551 |
| 64.0-64.4 | 24561-24575 | 24561, 24575 | 24562, 24563, 24564, 24565, 24566, 24567, 24568, 24569, 24570, 24571, 24572, 24573, 24574 |
| 64.4-64.8 | 24584-24598 | 24584, 24598 | 24585, 24586, 24587, 24588, 24589, 24590, 24591, 24592, 24593, 24594, 24595, 24596, 24597 |
| 64.8-65.2 | 24607-24621 | 24607, 24621 | 24608, 24609, 24610, 24611, 24612, 24613, 24614, 24615, 24616, 24617, 24618, 24619, 24620 |
| 65.2-65.6 | 24630-24645 | 24630, 24645 | 24631, 24632, 24633, 24634, 24635, 24636, 24637, 24638, 24639, 24640, 24641, 24642, 24643, 24644 |
| 65.6-66.0 | 24653-24668 | 24653, 24668 | 24654, 24655, 24656, 24657, 24658, 24659, 24660, 24661, 24662, 24663, 24664, 24665, 24666, 24667 |
| 66.0-66.4 | 24676-24691 | 24676, 24691 | 24677, 24678, 24679, 24680, 24681, 24682, 24683, 24684, 24685, 24686, 24687, 24688, 24689, 24690 |

(continued)

| Bandwidth (GHz) | All global synchronization numbers Sync raster | Global synchronization number of the shared spectrum Sync raster | Global synchronization number of the non-shared spectrum Sync raster |
|---|---|---|---|
| 66.4-66.8 | 24700-24714 | 24700, 24714 | 24701, 24702, 24703, 24704, 24705, 24706, 24707, 24708, 24709, 24710, 24711, 24712, 24713 |
| 66.8-67.2 | 24723-24737 | 24723, 24737 | 24724, 24725, 24726, 24727, 24728, 24729, 24730, 24731, 24732, 24733, 24734, 24735, 24736 |
| 67.2-67.6 | 24746-24760 | 24746, 24760 | 24747, 24748, 24749, 24750, 24751, 24752, 24753, 24754, 24755, 24756, 24757, 24758, 24759 |
| 67.6-68.0 | 24769-24783 | 24769, 24783 | 24770, 24771, 24772, 24773, 24774, 24775, 24776, 24777, 24778, 24779, 24780, 24781, 24782, |
| 68.0-68.4 | 24792-24807 | 24792, 24807 | 24793, 24794, 24795, 24796, 24797, 24798, 24799, 24800, 24801, 24802, 24803, 24804, 24805, 24806 |
| 68.4-68.8 | 24815-24830 | 24815, 24830 | 24816, 24817, 24818, 24819, 24820, 24821, 24822, 24823, 24824, 24825, 24826, 24827, 24828, 24829 |
| 68.8-69.2 | 24839-24853 | 24839, 24853 | 24840, 24841, 24842, 24843, 24844, 24845, 24846, 24847, 24848, 24849, 24850, 24851, 24852 |
| 69.2-69.6 | 24862-24876 | 24862, 24876 | 24863, 24864, 24865, 24866, 24867, 24868, 24869, 24870, 24871, 24872, 24873, 24874, 24875 |
| 69.6-70.0 | 24885-24899 | 24885, 24899 | 24886, 24887, 24888, 24889, 24890, 24891, 24892, 24893, 24894, 24895, 24896, 24897, 24898 |
| 70.0-70.4 | 24908-24922 | 24908, 24922 | 24909, 24910, 24911, 24912, 24913, 24914, 24915, 24916, 24917, 24918, 24919, 24920, 24921 |
| 70.4-70.8 | 24931-24945 | 24931, 24945 | 24932, 24933, 24934, 24935, 24936, 24937, 24938, 24939, 24940, 24941, 24942, 24943, 24944 |
| 70.8-71.0 | 24954-24957 | 24954, 24957 | 24955, 24956 |

An SSB working on the shared spectrum may be placed on synchronization rasters corresponding to some or all global synchronization numbers of the shared spectrum in Table 6. An SSB working on the non-shared spectrum may be placed on synchronization rasters corresponding to some or all global synchronization numbers of the non-shared spectrum in Table 6.

In a possible implementation, in the first bandwidth, a quantity of global synchronization numbers of an available shared spectrum may be 2, and the global synchronization numbers are located on a largest global synchronization number and a smallest global synchronization number in the first bandwidth. A quantity of global synchronization numbers of the non-shared spectrum may also be 2. A step size between a global synchronization number of the non-shared spectrum at a lower frequency domain location and a global synchronization number at a lower frequency domain location in the shared spectrum is N1, where N1 may be equal to 3 or 4. A step size between a global synchronization number of the non-shared spectrum at a higher frequency domain location and a global synchronization number at a higher frequency domain location in the shared spectrum is N2, where N2 may be equal to 3 or 4. A step size N3 between the two global synchronization numbers in the non-shared spectrum may be 5 or 3. For example, in the first bandwidth of 70.4 GHz to 70.8 GHz, global synchronization numbers used for the shared spectrum in the synchronization raster may be 24931 and 24945, and global synchronization numbers used for the non-shared spectrum in the synchronization raster may be 24936 and 24940. Values of N1, N2, and N3 are not particularly limited in this application.

In a possible implementation, in the first bandwidth, the quantity of global synchronization numbers of the available shared spectrum may be 2, and the global synchronization numbers are located on the largest global synchronization number and the smallest global synchronization number in the first bandwidth. The quantity of global synchronization numbers of the non-shared spectrum may be 1. A step size N4 between the global synchronization number of the non-shared spectrum and the global synchronization number at the lower frequency domain location and a step size N4 between the global synchronization number of the non-shared spectrum and the global synchronization number at the higher frequency domain location in the shared spectrum may be any number in 5 to 7. For example, in the first bandwidth of 70.4 GHz to 70.8 GHz, the global synchronization numbers used for the shared spectrum in the synchronization raster are 24931 and 24945, N4 = 6, and the global synchronization number used for the non-shared spectrum in the synchronization raster is 24938. A value of N4 is not particularly limited in this application.

In some embodiments, according to the foregoing first rule, when the subcarrier spacing is 960 kHz, the network device determines that the first bandwidth is 400 MHz. In the frequency band above 52.6 GHz, global synchronization numbers determined according to the first formula and based on the first bandwidth are shown in Table 7, where the synchronization raster granularity is 17.28. An example in which the synchronization rasters of the shared spectrum are a synchronization raster with a smallest number and a synchronization raster with a largest number in the first bandwidth, and the other synchronization rasters are the synchronization rasters of the non-shared spectrum is used in Table 7. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a smallest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a largest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum.

It should be noted that the utilization rate of the first bandwidth cannot reach 100%. For example, the utilization rate of the bandwidth can only reach 95.04%. Therefore, within 400 MHz, a location of a largest synchronization raster in frequency domain is less than or equal to the 274.82th MHz in the bandwidth. Within 400 MHz, a location of a smallest synchronization raster in frequency domain is greater than or equal to the 125.06th MHz. It should be noted that in some embodiments, in the first bandwidth, one complete SSB can be placed on a synchronization raster corresponding to each global synchronization number. This is used as an example but is not limited in this application.

It should be noted that, when the first subcarrier spacing is 960 kHz, the corresponding SSB occupies a bandwidth of 230.4 MHz (that is, 960 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 57.6 MHz on both the upper side and the lower side of the synchronization raster.

It should be noted that the spectrum segment 52.6 GHz to 57 GHz is the shared spectrum for all countries. Therefore, only the synchronization raster design method in the frequency band range of 57 GHz to 71 GHz is provided herein.

**Table 7 Global synchronization numbers of the shared spectrum and the non-shared spectrum when the frequency band is 57 GHz to 71 GHz, the synchronization raster granularity is 17.28 MHz, and the subcarrier spacing of the SSB is 960 kHz**

| Bandwidth (GHz) | All global synchronization numbers<br><br>Sync raster | Global synchronization number of the shared spectrum<br>Sync raster | Global synchronization number of the non-shared spectrum<br>Sync raster |
|---|---|---|---|
| 56.8-57.2 | 24152-24155 | 24152, 24155 | 24153, 24154 |
| 57.2-57.6 | 24171-24178 | 24171, 24178 | 24172, 24173, 24174, 24175, 24176, 24177, 24178 |
| 57.6-58.0 | 24194-24201 | 24194, 24201 | 24195, 24196, 24197, 24198, 24199, 24200 |
| 58.0-58.4 | 24217-24225 | 24217, 24225 | 24218, 24219, 24220, 24221, 24222, 24223, 24224 |
| 58.4-58.8 | 24240-24248 | 24240, 24248 | 24241, 24242, 24243, 24244, 24245, 24246, 24247 |
| 58.8-59.2 | 24263-24271 | 24263, 24271 | 24264, 24265, 24266, 24267, 24268, 24269, 24270 |
| 59.2-59.6 | 24286-24294 | 24286, 24294 | 24287, 24288, 24289, 24290, 24291, 24292, 24293 |
| 59.6-60.0 | 24309-24317 | 24309, 24317 | 24310, 24311, 24312, 24313, 24314, 24315, 24316 |
| 60.0-60.4 | 24333-24340 | 24333, 24340 | 24334, 24335, 24336, 24337, 24338, 2083 |
| 60.4-60.8 | 24356-24363 | 24356, 24363 | 24356, 24357, 24358, 24359, 24360, 24361, 24362 |
| 60.8-61.2 | 24379-24387 | 24379, 24387 | 24380, 24381, 24382, 24383, 24384, 24385, 24386 |
| 61.2-61.6 | 24402-24410 | 24402, 24410 | 24403, 24404, 24405, 24406, 24407, 24408, 24409 |
| 61.6-62.0 | 24425-24433 | 24425, 24433 | 24426, 24427, 24428, 24429, 24430, 24431, 24432 |
| 62.0-62.4 | 24448-24456 | 24448, 24456 | 24449, 24450, 24451, 24452, 24453, 24454, 24455 |
| 62.4-62.8 | 24471-24480 | 24471, 24480 | 24472, 24473, 24474, 24475, 24476, 24477, 24478 |
| 62.8-63.2 | 24495-24502 | 24495, 24502 | 24496, 24497, 24498, 24499, 24500, 24501 |
| 63.2-63.6 | 24518-24525 | 24518, 24525 | 24519, 24520, 24521, 24522, 24523, 24524 |
| 63.6-64.0 | 24541-24549 | 24541, 24549 | 24542, 24543, 24544, 24545, 24546, 24547, 24548 |
| 64.0-64.4 | 24564-24572 | 24564, 24572 | 24565, 24566, 24567, 24568, 24569, 24570, 24571 |
| 64.4-64.8 | 24587-24595 | 24587, 24595 | 2332, 24589, 2334, 2335, 2336, 24593, 2338 |

(continued)

| Bandwidth (GHz) | All global synchronization numbers<br><br>Sync raster | Global synchronization number of the shared spectrum<br>Sync raster | Global synchronization number of the non-shared spectrum<br>Sync raster |
|---|---|---|---|
| 64.8-65.2 | 24610-24618 | 24610, 24618 | 24611, 24612, 24613, 24614, 24615, 24616, 24617 |
| 65.2-65.6 | 24634-24641 | 246348, 24641 | 24635, 24636, 24637, 24638, 24639, 24640 |
| 65.6-66.0 | 24657-24664 | 24657, 24664 | 24658, 24659, 24660, 24661, 24662, 24663 |
| 66.0-66.4 | 24680-24687 | 24680, 24687 | 24681, 24682, 24683, 24684, 24685, 24686 |
| 66.4-66.8 | 24703-24711 | 24703, 24711 | 24704, 24705, 24706, 24707, 24708, 24709, 24710 |
| 66.8-67.2 | 24726-24734 | 24726, 24734 | 24727, 24728, 24729, 24730, 24731, 24732, 24733 |
| 67.2-67.6 | 24749-24757 | 24749, 24757 | 24750, 24751, 24752, 24753, 24754, 24755, 24756 |
| 67.6-68.0 | 24772-24780 | 24772, 24780 | 24773, 24774, 24775, 24776, 24777, 24778, 24779 |
| 68.0-68.4 | 24796-24803 | 24796, 24803 | 24797, 24798, 24799, 24800, 24801, 24802 |
| 68.4-68.8 | 24819-24826 | 24819, 24826 | 24820, 24821, 24822, 24823, 24824, 24825, 24826 |
| 68.8-69.2 | 24842-24850 | 24842, 24850 | 24843, 24844, 24845, 24846, 24847, 24848, 24849 |
| 69.2-69.6 | 24865-24873 | 24865, 24873 | 24866, 24867, 24868, 24869, 24870, 24871, 24872 |
| 69.6-70.0 | 24888-24896 | 24888, 24896 | 24889, 24890, 24891, 24892, 24893, 24894, 24895 |
| 70.0-70.4 | 24911-24919 | 24911, 24919 | 24912, 24913, 24914, 24915, 24926, 24927, 24928, 24929 |
| 70.4-70.8 | 24934-24942 | 24934, 24942 | 24935, 24936, 24937, 24938, 24939, 24940, 24941 |
| 70.8-71.0 | | | |

The SSB working on the shared spectrum may be placed on some or all global synchronization numbers of the shared spectrum in Table 7. The SSB working on the non-shared spectrum may be placed on some or all global synchronization numbers of the shared spectrum in Table 7.

In a possible implementation, in the first bandwidth, the quantity of global synchronization numbers of the available shared spectrum may be 2, and the global synchronization numbers are located on the largest global synchronization number and the smallest global synchronization number in the first bandwidth. The quantity of global synchronization numbers of the non-shared spectrum may be 1. A step size N5 between the global synchronization number of the non-shared spectrum and the global synchronization number at the lower frequency domain location and a step size N5 between the global synchronization number of the non-shared spectrum and the global synchronization number at the higher frequency domain location in the shared spectrum may be any number in 2 and 3. For example, in the first bandwidth of 70.4 GHz to 70.8 GHz, the global synchronization numbers used for the shared spectrum in the synchronization raster are 24934 and 24942, N5 = 3, and the global synchronization number used for the non-shared spectrum in the synchronization raster is 24938. A specific value of N5 is not limited in this application.

In some embodiments, the first rule is that when designing the synchronization rasters, the network device does not distinguish between some rasters that are specifically used to send SSBs corresponding to terminal devices of the shared spectrum and some rasters that are specifically used to send SSBs corresponding to terminal devices of the non-shared spectrum. When the network device sends the SSB to the terminal device, the SSB carries first signaling for indicating that a current target SSB of the terminal device is an SSB of the non-shared spectrum or an SSB of the shared spectrum. Correspondingly, the global synchronization number of the non-shared spectrum or the global synchronization number of the shared spectrum is not distinguished in Tables 1 to 7.

S230: The network device sends the SSB to the terminal device based on a synchronization raster type.

In a possible implementation, the network device determines that the frequency range corresponding to the first bandwidth is the shared spectrum corresponding to the terminal device, and the network device sends the SSB to the terminal device on the synchronization raster of the shared spectrum. The network device determines that the frequency range corresponding to the first bandwidth is the non-shared spectrum corresponding to the terminal device, and the network device sends the SSB to the terminal device on the synchronization raster of the non-shared spectrum.

In a possible implementation, the network device determines that the frequency range corresponding to the first bandwidth is the shared spectrum or the non-shared spectrum corresponding to the terminal device, and the network device sends the SSB to the terminal device. The SSB includes the first signaling for indicating a method for parsing the SSB, or indicating that the SSB is the SSB of the non-shared spectrum or the SSB of the shared spectrum.

S240: The terminal device searches for the target SSB in the frequency range corresponding to the first bandwidth.

The terminal device searches for the SSB in the frequency range corresponding to the first bandwidth.

In a possible implementation, if a global synchronization number of a synchronization raster corresponding to a found target SSB is the global synchronization number of the non-shared spectrum, the terminal device parses the SSB according to a method corresponding to the non-shared spectrum. If the global synchronization number of the synchronization raster corresponding to the found target SSB is the global synchronization number of the shared spectrum, the terminal device parses the SSB according to a method corresponding to the shared spectrum.

In a possible implementation, the target SSB found by the terminal device includes the first signaling, and the terminal device parses the SSB based on content of the first signaling.

According to the synchronization raster design method provided in this embodiment of this application, an adaptive first bandwidth is provided for different subcarrier spacings. In the first bandwidth, a synchronization raster is properly designed, to place a synchronization signal block SSB, so that a terminal device can access a target SSB by traversing as few SSBs as possible in a search capability range. This reduces power consumption of the terminal device and improves SSB search efficiency of the terminal device.

FIG. 5 is a schematic diagram of a communication apparatus 500 according to an embodiment of this application. Each unit in the communication apparatus 500 may be implemented by using software.

In some embodiments, the communication apparatus 500 may be the network device in the foregoing method embodiment 200, or may be a chip configured to implement functions of the network device in the foregoing method embodiment. It should be understood that the communication apparatus 500 may correspond to the steps corresponding to the network device in the method 200 in embodiments of this application. The communication apparatus 500 includes:

a transceiver unit 510, configured to send an SSB to a terminal device; and
a processing unit 520, configured to determine a first bandwidth.

Specifically, the first bandwidth is a search bandwidth needed by the terminal device to perform one cell search, and the terminal device accesses a suitable cell by searching for a synchronization signal block (SSB).

Optionally, in this embodiment of this application, a frequency range of the first bandwidth is above 52.6 GHz, to be specific, 52.6 GHz to 71 GHz. The first bandwidth is one segment between 52.6 GHz and 71 GHz.

It should be understood that, in this embodiment of this application, the frequency band above 52.6 GHz is used as an example to design a synchronization raster sync raster. When a frequency range is above the frequency band in the example in this embodiment of this application, the synchronization raster may also be designed by using the method in this embodiment of this application. This is not limited in this embodiment of this application.

Optionally, the processing unit 520 determines a size of the first bandwidth based on a first subcarrier spacing of the SSB.

In some embodiments, the first subcarrier spacing of the SSB is 120 kilohertz kHz, and the processing unit 520 determines that the first bandwidth may be 100 MHz.

In some embodiments, the first subcarrier spacing of the SSB is 480 kHz, and the processing unit 520 determines that the first bandwidth may be 400 MHz.

In some embodiments, the subcarrier spacing of the SSB is 960 kHz, and the processing unit 520 determines that the first bandwidth may be 400 MHz.

It should be noted that the processing unit 520 may determine the size of the first bandwidth based on a size of the SSB corresponding to the first subcarrier spacing and a bandwidth supported by the terminal device. The size of the first bandwidth ensures that a capability of the terminal device can be adapted to, the terminal device traverses a small quantity of frequency domain locations during SSB search to shorten time required for the cell search, and at least one synchronization raster exists in the first bandwidth.

The processing unit 520 is further configured to determine a global synchronization number in the frequency range corresponding to the first bandwidth.

It should be noted that one global synchronization number corresponds to one synchronization raster, one synchronization raster corresponds to one SSB, and the transceiver unit 510 sends the SSB at a frequency domain location of the synchronization raster corresponding to the global synchronization number. Correspondingly, the terminal device receives the SSB at the location of the synchronization raster. It should be noted that the terminal device searches for a target SSB in the frequency range corresponding to the first bandwidth, and receives the target SSB when finding the target SSB.

It should be noted that the processing unit 520 determines a frequency domain location of a synchronization raster in the frequency range of the first bandwidth according to the following formula:

$$f = 24250.8 \text{ MHz} + A \text{ MHz} \times N.$$

f represents a frequency corresponding to a global synchronization number, A represents a synchronization raster granularity, N + 22256 represents the global synchronization number, and N is a positive integer greater than or equal to 0. It should be understood that one frequency corresponds to one global synchronization number.

In a possible implementation, the processing unit 520 determines the global synchronization number in the first bandwidth according to a first rule. The processing unit 520 determines to correspondingly send, on synchronization rasters corresponding to some global synchronization numbers in the frequency range of the first bandwidth, an SSB for a terminal device located in a shared spectrum. A synchronization raster on which the SSB for the terminal device located in the shared spectrum is sent is a synchronization raster of the shared spectrum, and a global synchronization number corresponding to the synchronization raster is a global synchronization number of the shared spectrum. The processing unit 520 correspondingly sends, on synchronization rasters corresponding to some global synchronization numbers, an SSB for a terminal device located in a non-shared spectrum. A synchronization raster on which the SSB for the terminal device located in the non-shared spectrum is sent is a synchronization raster of the non-shared spectrum, and a global synchronization number corresponding to the synchronization raster is a global synchronization number of the non-shared spectrum. In a possible implementation, the synchronization raster of the shared spectrum is a synchronization raster with a smallest number and/or a synchronization raster with a largest number in the first bandwidth, and the other synchronization raster is the synchronization raster of the non-shared spectrum. Alternatively, in a possible implementation, the synchronization raster of the non-shared spectrum is a synchronization raster with a smallest number and/or a synchronization raster with a largest number in the first bandwidth, and the other synchronization raster is the synchronization raster of the shared spectrum.

In some embodiments, according to the foregoing first rule, when the subcarrier spacing is 120 kHz, the processing unit 520 determines that the first bandwidth is 100 MHz. In the frequency band above 52.6 GHz, global synchronization numbers determined according to the first formula and based on the first bandwidth are shown in Table 1, where a synchronization raster granularity is 17.28 MHz. An example in which synchronization rasters of the shared spectrum are a synchronization raster with a smallest number and a synchronization raster with a largest number in the first bandwidth, and the other synchronization rasters are synchronization rasters of the non-shared spectrum is used in Table 1. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. An example in which the synchronization raster of the shared spectrum is a synchronization raster with a smallest number in the first bandwidth, and the other synchronization rasters are the synchronization rasters of the non-shared spectrum is used in Table 2. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. An example in which the synchronization raster of the shared spectrum is a synchronization raster with a largest number in the first bandwidth, and the other synchronization rasters are the synchronization rasters of the non-shared spectrum is used in Table 3. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum.

It should be noted that a utilization rate of the first bandwidth cannot reach 100%. For example, the utilization rate of the bandwidth can only reach 95.04%. Therefore, within 100 MHz, a location of a largest synchronization raster in frequency domain is less than or equal to the 83.06th MHz in the bandwidth, where 83.06 MHz = 99.88 MHz - 14.4 MHz - 2.42 MHz. Within 100 MHz, a location of a smallest synchronization raster in frequency domain is greater than or equal to the 16.82th MHz, where 16.82 MHz = 14.4 MHz + 2.42 MHz. It should be noted that in some embodiments, in the first bandwidth, one complete SSB can be placed on a synchronization raster corresponding to each global synchronization number. This is used as an example in this application, but is not limited thereto.

It should be noted that, when the first subcarrier spacing is 120 kHz, the corresponding SSB occupies a bandwidth of 28.8 MHz (that is, 120 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 14.4 MHz on both an upper side and a lower side of the synchronization raster, and a schematic diagram of the SSB is shown in FIG. 3. It should be noted that, corresponding to the foregoing formula, a frequency in a formula corresponding to the synchronization raster corresponds to a center frequency of an SSB placed on the synchronization raster.

It should be noted that a spectrum segment 52.6 GHz to 57 GHz is a shared spectrum for all countries. Therefore, only a synchronization raster design method in a frequency band range of 57 GHz to 71 GHz is provided herein.

By way of example, and not limitation, the frequency range corresponding to the first bandwidth is 63.9 GHz to 64.0 GHz. According to the foregoing design, a synchronization raster with a largest global synchronization number and a synchronization raster with a smallest global synchronization number in the first bandwidth are the global synchronization numbers of the shared spectrum, and the other synchronization rasters are global synchronization numbers of the non-shared spectrum. FIG. 4 is an example of this design method. SSBs of the shared spectrum are located on global synchronization numbers 24668 and 24671, and SSBs of the non-shared spectrum are located on global synchronization numbers 24669 and 24670. 24667 is a synchronization raster that does not meet a condition, to be specific, cannot correspond to one complete SSB in the frequency range of the first bandwidth. It should be noted that, this may also be a reverse case. Alternatively, a synchronization raster with a largest global synchronization number in the first bandwidth is the synchronization raster of the shared spectrum, or a synchronization raster with a smallest global synchronization number in the first bandwidth is the synchronization raster of the shared spectrum, and the other synchronization rasters are the synchronization rasters of the non-shared spectrum, or the foregoing case is reverse. It should be understood that the processing unit 520 only needs to specify one placement rule, and publish the rule to the terminal device, so that the terminal device can determine, in the method provided in this embodiment, that a found SSB is of the non-shared spectrum or the shared spectrum.

Table 4 and Table 5 show synchronization raster designs when the synchronization raster granularity is 34.56 MHz.

It should be noted that Table 4 and Table 5 may be understood as searching for an SSB with a 240 kHz subcarrier spacing by using a synchronization raster granularity of 17.28 MHz, or may be understood as searching for an SSB by using a synchronization raster granularity of 34.56 MHz.

In some embodiments, according to the foregoing first rule, when the subcarrier spacing is 480 kHz, the processing unit 520 determines that the first bandwidth is 400 MHz. In the frequency band above 52.6 GHz, global synchronization numbers determined according to the first formula and based on the first bandwidth are shown in Table 6, where the synchronization raster granularity is 17.28 MHz. An example in which the synchronization rasters of the shared spectrum are a synchronization raster with a smallest number and a synchronization raster with a largest number in the first bandwidth, and the other synchronization rasters are the synchronization rasters of the non-shared spectrum is used in Table 6. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a smallest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a largest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. This is not limited in this application.

It should be noted that the utilization rate of the first bandwidth cannot reach 100%. For example, the utilization rate of the bandwidth can only reach 95.04%. Therefore, within 400 MHz, a location of a largest synchronization raster in frequency domain is less than or equal to the 332.42th MHz in the bandwidth. Within 400 MHz, a location of a smallest synchronization raster in frequency domain is greater than or equal to the 67.46th MHz. It should be noted that in some embodiments, in the first bandwidth, one complete SSB can be placed on a synchronization raster corresponding to each global synchronization number. This is used as an example but is not limited in this application.

It should be noted that, when the first subcarrier spacing is 480 kHz, the corresponding SSB occupies a bandwidth of 115.2 MHz (that is, 480 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 57.6 MHz on both the upper side and the lower side of the synchronization raster.

It should be noted that the spectrum segment 52.6 GHz to 57 GHz is the non-shared spectrum for all countries. Therefore, only the synchronization raster design method in the frequency band range of 57 GHz to 71 GHz is provided herein. The global synchronization number of the shared spectrum may alternatively be a global synchronization number of the non-shared spectrum, and the global synchronization number of the non-shared spectrum may alternatively be a global synchronization number of the shared spectrum.

In some embodiments, according to the foregoing first rule, when the subcarrier spacing is 960 kHz, the processing unit 520 determines that the first bandwidth is 400 MHz. In the frequency band above 52.6 GHz, global synchronization numbers determined according to the first formula and based on the first bandwidth are shown in Table 7, where the synchronization raster granularity is 17.28. An example in which the synchronization rasters of the shared spectrum are a synchronization raster with a smallest number and a synchronization raster with a largest number in the first bandwidth, and the other synchronization rasters are the synchronization rasters of the non-shared spectrum is used in Table 7. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a smallest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a largest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. This is not limited in this application.

It should be noted that the utilization rate of the first bandwidth cannot reach 100%. For example, the utilization rate of the bandwidth can only reach 95.04%. Therefore, within 400 MHz, the location of the largest synchronization raster in frequency domain is less than or equal to the 274.82th MHz in the bandwidth. Within 400 MHz, the location of the smallest synchronization raster in frequency domain is greater than or equal to the 125.06th MHz. It should be noted that in some embodiments, in the first bandwidth, one complete SSB can be placed on a synchronization raster corresponding to each global synchronization number. This is used as an example but is not limited in this application.

It should be noted that, when the first subcarrier spacing is 960 kHz, the corresponding SSB occupies a bandwidth of 230.4 MHz (that is, 960 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 57.6 MHz on both the upper side and the lower side of the synchronization raster.

It should be noted that the spectrum segment 52.6 GHz to 57 GHz is the shared spectrum for all countries. Therefore, only the synchronization raster design method in the frequency band range of 57 GHz to 71 GHz is provided herein.

In some embodiments, the first rule is that when designing the synchronization rasters, the processing unit 520 does not distinguish between some rasters that are specifically used to send SSBs corresponding to terminal devices of the shared spectrum and some rasters that are specifically used to send SSBs corresponding to terminal devices of the non-shared spectrum. When the transceiver unit 510 sends the SSB to the terminal device, the SSB carries first signaling for indicating that a current target SSB of the terminal device is the SSB of the shared spectrum or the SSB of the non-shared spectrum.

The transceiver unit 510 is further configured to send the SSB to the terminal device based on the synchronization raster type.

In a possible implementation, the processing unit 520 determines that the frequency range corresponding to the first bandwidth is the shared spectrum corresponding to the terminal device, and the transceiver unit 510 sends the SSB to the terminal device on the synchronization raster of the shared spectrum. The processing unit 520 determines that the frequency range corresponding to the first bandwidth is the non-shared spectrum corresponding to the terminal device, and the transceiver unit 510 sends the SSB to the terminal device on the synchronization raster of the non-shared spectrum.

In a possible implementation, the processing unit 520 determines that the frequency range corresponding to the first bandwidth is the shared spectrum or the non-shared spectrum corresponding to the terminal device, and the transceiver unit 510 sends the SSB to the terminal device. The SSB includes the first signaling for indicating a method for parsing the SSB, or indicating that the SSB is the SSB of the non-shared spectrum or the SSB of the shared spectrum.

In some embodiments, the communication apparatus 500 may be the terminal device in the foregoing method embodiment 200, or may be a chip configured to implement functions of the terminal device in the foregoing method embodiment. It should be understood that the communication apparatus 500 may correspond to the steps corresponding to the terminal device in the method 200 in embodiments of this application. The communication apparatus 500 includes:

a transceiver unit 510, configured to receive an SSB; and
a processing unit 520, configured to parse an SSB.

Specifically, a first bandwidth is a search bandwidth needed by the processing unit 520 to perform one cell search, and the processing unit 520 accesses a suitable cell by searching for a synchronization signal block (SSB).

Optionally, in this embodiment of this application, the frequency range of the first bandwidth is above 52.6 GHz, to be specific, 52.6 GHz to 71 GHz. The first bandwidth is one segment between 52.6 GHz and 71 GHz.

It should be understood that, in this embodiment of this application, the frequency band above 52.6 GHz is used as an example to design a synchronization raster sync raster. When a frequency range is above the frequency band in the example in this embodiment of this application, the synchronization raster may also be designed by using the method in this embodiment of this application. This is not limited in this embodiment of this application.

Optionally, a network device determines a size of the first bandwidth based on a first subcarrier spacing of the SSB.

In some embodiments, the first subcarrier spacing of the SSB is 120 kilohertz kHz, and the network device determines that the first bandwidth may be 100 MHz.

In some embodiments, the first subcarrier spacing of the SSB is 480 kHz, and the network device determines that the first bandwidth may be 400 MHz.

In some embodiments, the subcarrier spacing of the SSB is 960 kHz, and the network device determines that the first bandwidth may be 400 MHz.

It should be noted that the network device may determine the size of the first bandwidth based on a size of the SSB corresponding to the first subcarrier spacing and a bandwidth supported by the processing unit 520. The size of the first bandwidth ensures that a capability of the processing unit 520 can be adapted to, the processing unit 520 traverses a small quantity of frequency domain locations during SSB search to shorten time required for the cell search, and at least one synchronization raster exists in the first bandwidth.

It should be noted that one global synchronization number corresponds to one synchronization raster, one synchronization raster corresponds to one SSB, and the network device sends the SSB at a frequency domain location of a synchronization raster corresponding to a global synchronization number. Correspondingly, the transceiver unit 510 receives the SSB at the location of the synchronization raster. It should be noted that the processing unit 520 searches for a target SSB in the frequency range corresponding to the first bandwidth, and receives the target SSB when finding the target SSB.

It should be noted that the network device determines a number of a synchronization raster in the frequency range of the first bandwidth according to the following formula:

$$f = 24250.8\ \text{MHz} + A\ \text{MHz} \times N.$$

f represents a frequency corresponding to a global synchronization number, A represents a synchronization raster granularity, N + 22256 represents the global synchronization number, and N is a positive integer greater than or equal to 0 and less than or equal to 4383. It should be understood that one frequency corresponds to one global synchronization number.

In a possible implementation, the network device determines the global synchronization number in the first bandwidth according to the first rule. The network device determines to correspondingly send, on synchronization rasters corresponding to some global synchronization numbers in the frequency range of the first bandwidth, an SSB for a processing unit 520 located in the shared spectrum. A synchronization raster on which the SSB for the terminal device located in the shared spectrum is sent is a synchronization raster of the shared spectrum, and a global synchronization number corresponding to the synchronization raster is a global synchronization number of the shared spectrum. The network device correspondingly sends, on synchronization rasters corresponding to some global synchronization numbers, an SSB for a processing unit 520 located in a non-shared spectrum. A synchronization raster on which the SSB for the processing unit 520 located in the non-shared spectrum is sent is a synchronization raster of the non-shared spectrum, and a global synchronization number corresponding to the synchronization raster is a global synchronization number of the non-shared spectrum. In a possible implementation, the synchronization raster of the non-shared spectrum is a synchronization raster with a smallest number and/or a synchronization raster with a largest number in the first bandwidth, and the other synchronization raster is the synchronization raster of the shared spectrum. Alternatively, in a possible implementation, the synchronization raster of the shared spectrum is a synchronization raster with a smallest number and/or a synchronization raster with a largest number in the first bandwidth, and the other synchronization raster is the synchronization raster of the non-shared spectrum.

In some embodiments, according to the foregoing first rule, when the subcarrier spacing is 120 kHz, the network device determines that the first bandwidth is 100 MHz. In the frequency band above 52.6 GHz, global synchronization numbers determined according to the first formula and based on the first bandwidth are shown in Table 1, where a synchronization raster granularity is 17.28 MHz. An example in which synchronization rasters of the non-shared spectrum are a synchronization raster with a smallest number and a synchronization raster with a largest number in the first bandwidth, and the other synchronization rasters are the synchronization rasters of the shared spectrum is used in Table 1. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. An example in which the synchronization raster of the non-shared spectrum is a synchronization raster with a smallest number in the first bandwidth, and the other synchronization rasters are the synchronization rasters of the shared spectrum is used in Table 2. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. An example in which the synchronization raster of the non-shared spectrum is a synchronization raster with a largest number in the first bandwidth, and the other synchronization rasters are the synchronization rasters of the shared spectrum is used in Table 3. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum.

It should be noted that a utilization rate of the first bandwidth cannot reach 100%. For example, the utilization rate of the bandwidth can only reach 95.04%. Therefore, within 100 MHz, a location of a largest synchronization raster in frequency domain is less than or equal to the 83.06th MHz in the bandwidth, where 83.06 MHz = 99.88 MHz - 14.4 MHz - 2.42 MHz. Within 100 MHz, a location of a smallest synchronization raster in frequency domain is greater than or equal to the 16.82th MHz, where 16.82 MHz = 14.4 MHz + 2.42 MHz. It should be noted that in some embodiments, in the first bandwidth, one complete SSB can be placed on a synchronization raster corresponding to each global synchronization number. This is used as an example in this application, but is not limited thereto.

It should be noted that, when the first subcarrier spacing is 120 kHz, the corresponding SSB occupies a bandwidth of 28.8 MHz (that is, 120 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 14.4 MHz on both the upper side and the lower side of the synchronization raster, and the schematic diagram of the SSB is shown in FIG. 3. It should be noted that, corresponding to the foregoing formula, a frequency in the formula corresponding to the synchronization raster corresponds to the center frequency of the SSB placed on the synchronization raster.

It should be noted that a spectrum segment 52.6 GHz to 57 GHz is a shared spectrum for all countries. Therefore, only a synchronization raster design method in a frequency band range of 57 GHz to 71 GHz is provided herein. The global synchronization number of the shared spectrum may alternatively be the global synchronization number of the non-shared spectrum, and the global synchronization number of the non-shared spectrum may alternatively be the global synchronization number of the shared spectrum.

By way of example, and not limitation, the frequency range corresponding to the first bandwidth is 63.9 GHz to 64.0 GHz. According to the foregoing design, a synchronization raster with a largest global synchronization number and a synchronization raster with a smallest global synchronization number in the first bandwidth are the synchronization rasters of the non-shared spectrum, and the other synchronization rasters are the synchronization rasters of the shared spectrum. FIG. 4 is an example of this design method. SSBs on a frequency band of the shared spectrum are located on the global synchronization numbers 24668 and 24671, and SSBs on a non-shared frequency band are located on the global synchronization numbers 24669 and 24670. 24667 is a synchronization raster that does not meet a condition, to be specific, cannot correspond to one complete SSB in the frequency range of the first bandwidth. It should be noted that, this may also be a reverse case. Alternatively, a synchronization raster with a largest global synchronization number in the first bandwidth is the synchronization raster of the shared spectrum, or a synchronization raster with a smallest global synchronization number in the first bandwidth is the synchronization raster of the shared spectrum, and the other synchronization rasters are the synchronization rasters of the non-shared spectrum, or the foregoing case is reverse. It should be understood that the network device only needs to specify one placement rule, and publish the rule to the processing unit 520, so that the processing unit 520 can determine, in the method provided in this embodiment, that a found SSB is of the non-shared spectrum or the shared spectrum.

Table 4 and Table 5 show synchronization raster designs when the synchronization raster granularity is 34.56 MHz.

It should be noted that Table 4 and Table 5 may be understood as searching for an SSB with a 240 kHz subcarrier spacing by using a synchronization raster granularity of 17.28 MHz, or may be understood as searching for an SSB with a 120 kHz subcarrier spacing by using a synchronization raster granularity of 34.56 MHz.

In some embodiments, according to the foregoing first rule, when the subcarrier spacing is 480 kHz, the network device determines that the first bandwidth is 400 MHz. In the frequency band above 52.6 GHz, global synchronization numbers determined according to the first formula and based on the first bandwidth are shown in Table 6, where the synchronization raster granularity is 17.28. An example in which the synchronization rasters of the shared spectrum are a synchronization raster with a smallest number and a synchronization raster with a largest number in the first bandwidth, and the other synchronization rasters are the synchronization rasters of the non-shared spectrum is used in Table 6. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is the synchronization raster with the smallest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the shared spectrum is a synchronization raster with a largest number in the first bandwidth, and the other synchronization rasters are the synchronization rasters of the non-shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. This is not limited in this application.

It should be noted that the utilization rate of the first bandwidth cannot reach 100%. For example, the utilization rate of the bandwidth can only reach 95.04%. Therefore, within 400 MHz, a location of a largest synchronization raster in frequency domain is less than or equal to the 332.42th MHz in the bandwidth. Within 400 MHz, a location of a smallest synchronization raster in frequency domain is greater than or equal to the 67.46th MHz. It should be noted that in some embodiments, in the first bandwidth, one complete SSB can be placed on a synchronization raster corresponding to each global synchronization number. This is used as an example but is not limited in this application.

It should be noted that, when the first subcarrier spacing is 480 kHz, the corresponding SSB occupies a bandwidth of 115.2 MHz (that is, 480 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 57.6 MHz on both the upper side and the lower side of the synchronization raster.

It should be noted that the spectrum segment 52.6 GHz to 57 GHz is the shared spectrum for all countries. Therefore, only the synchronization raster design method in the frequency band range of 57 GHz to 71 GHz is provided herein. The global synchronization number of the shared spectrum may alternatively be a global synchronization number of the non-shared spectrum, and the global synchronization number of the non-shared spectrum may alternatively be a global synchronization number of the shared spectrum.

In some embodiments, according to the foregoing first rule, when the subcarrier spacing is 960 kHz, the network device determines that the first bandwidth is 400 MHz. In the frequency band above 52.6 GHz, global synchronization numbers determined according to the first formula and based on the first bandwidth are shown in Table 4, where the synchronization raster granularity is 17.28. An example in which the synchronization rasters of the non-shared spectrum are a synchronization raster with a smallest number and a synchronization raster with the largest number in the first bandwidth, and the other synchronization rasters are the synchronization rasters of the shared spectrum is used in Table 7. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the non-shared spectrum is a synchronization raster with a smallest number in the first bandwidth, and the other synchronization rasters are the synchronization rasters of the shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. Alternatively, an example in which the synchronization raster of the non-shared spectrum is a synchronization raster with a largest number in the first bandwidth, and the other synchronization rasters are the synchronization rasters of the shared spectrum may be used. In a reverse case, in the table, the global synchronization number of the shared spectrum only needs to be replaced with the global synchronization number of the non-shared spectrum, and the global synchronization number of the non-shared spectrum needs to be replaced with the global synchronization number of the shared spectrum. This is not limited in this application.

It should be noted that the utilization rate of the first bandwidth cannot reach 100%. For example, the utilization rate of the bandwidth can only reach 95.04%. Therefore, within 400 MHz, the location of the largest synchronization raster in frequency domain is less than or equal to the $274.82^{th}$ MHz in the bandwidth. Within 400 MHz, the location of the smallest synchronization raster in frequency domain is greater than or equal to the $125.06^{th}$ MHz. It should be noted that in some embodiments, in the first bandwidth, one complete SSB can be placed on a synchronization raster corresponding to each global synchronization number. This is used as an example but is not limited in this application.

It should be noted that, when the first subcarrier spacing is 960 kHz, the corresponding SSB occupies a bandwidth of 230.4 MHz (that is, 960 kHz * 12 * 20) in frequency domain. 12 indicates that one resource block (RB, Resource Block) includes 12 subcarriers, and 20 indicates that one SSB occupies 20 RBs. It should be noted that, in this embodiment of this application, the synchronization raster is located in the middle of the SSB. Therefore, the SSB occupies 57.6 MHz on both the upper side and the lower side of the synchronization raster.

It should be noted that the spectrum segment 52.6 GHz to 57 GHz is the shared spectrum for all countries. Therefore, only the synchronization raster design method in the frequency band range of 57 GHz to 71 GHz is provided herein.

In some embodiments, the first rule is that when designing the synchronization rasters, the network device does not distinguish between some rasters that are specifically used to send SSBs corresponding to processing units 520 of the shared spectrum and some rasters that are specifically used to send SSBs corresponding to processing units 520 of the non-shared spectrum. When the network device sends the SSB to the transceiver unit 510, the SSB carries the first signaling for indicating that a current target SSB of the processing unit 520 is the SSB of the non-shared spectrum or the SSB of the shared spectrum. Correspondingly, the global synchronization number of the non-shared spectrum or the global synchronization number of the shared spectrum is not distinguished in Tables 1 to 4.

The transceiver unit 510 is further configured to receive the SSB.

In a possible implementation, the network device determines that the frequency range corresponding to the first bandwidth is the shared spectrum corresponding to the processing unit 520, and the network device sends the SSB to the transceiver unit 510 on the synchronization raster of the shared spectrum. The network device determines that the frequency range corresponding to the first bandwidth is the non-shared spectrum corresponding to the processing unit 520, and the network device sends the SSB to the transceiver unit 510 on the synchronization raster of the non-shared spectrum.

In a possible implementation, the network device determines that the frequency range corresponding to the first bandwidth is the shared spectrum or the non-shared spectrum corresponding to the processing unit 520, and the network device sends the SSB to the transceiver unit 510. The SSB includes the first signaling for indicating a method for parsing the SSB, or indicating that the SSB is the SSB of the non-shared spectrum or the SSB of the shared spectrum.

The processing unit 520 is further configured to search for the SSB in the frequency range corresponding to the first bandwidth.

In a possible implementation, if a global synchronization number of a synchronization raster corresponding to a found target SSB is a global synchronization number of the non-shared spectrum, the processing unit 520 parses the SSB according to a method corresponding to the non-shared spectrum. If the global synchronization number of the synchronization raster corresponding to the found target SSB is a global synchronization number of the shared spectrum, the processing unit 520 parses the SSB according to a method corresponding to the shared spectrum.

In a possible implementation, the target SSB found by the processing unit 520 includes the first signaling, and the processing unit 520 parses the SSB based on content of the first signaling.

FIG. 6 is a schematic diagram of a communication apparatus 600 according to an embodiment of this application. The communication apparatus 600 includes a transceiver 610, a processor 620, and a memory 630. The memory 630 is configured to store instructions. The processor 620 is coupled to the memory 630, and is configured to execute the instructions stored in the memory, to perform the method provided in the foregoing embodiments of this application.

Specifically, the transceiver 610 in the communication apparatus 600 may correspond to the transceiver unit 510 in the communication apparatus 500, and the processor 620 in the communication apparatus 600 may correspond to the processing unit 520 in the communication apparatus 500.

It should be understood that the memory 630 and the processor 620 may be integrated into one processing apparatus. The processor 620 is configured to execute program code stored in the memory 630 to implement the foregoing functions. During specific implementation, the memory 630 may alternatively be integrated into the processor 620, or may be independent of the processor 620.

It should be understood that a specific process in which the transceiver and the processor perform the foregoing corresponding steps is described in detail in the foregoing method embodiments. For brevity, details are not described herein.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A synchronization raster design method, comprising:

    determining, by a network device, a first bandwidth, wherein a frequency range corresponding to the first bandwidth is above 52.6 gigahertz GHz; and
    configuring, by the network device, a plurality of synchronization rasters in the first bandwidth according to a first rule, wherein one synchronization signal block SSB is placed on each synchronization raster, and each synchronization raster corresponds to one global synchronization number.

**2.** The method according to claim 1, wherein the determining, by a network device, a first bandwidth comprises:

determining, by the network device, the first bandwidth based on a first subcarrier spacing of the SSB, wherein
when the first subcarrier spacing is 120 kilohertz kHz, the first bandwidth is 100 megahertz MHz;
when the first subcarrier spacing is 480 kHz, the first bandwidth is 400 MHz; or
when the first subcarrier spacing is 960 kHz, the first bandwidth is 400 MHz.

**3.** The method according to claim 1 or 2, wherein synchronization raster types comprise a synchronization raster of a shared spectrum and a synchronization raster of a non-shared spectrum.

**4.** The method according to any one of claims 1 to 3, wherein the first rule is:
in the first bandwidth, the synchronization raster of the shared spectrum and the synchronization raster of the non-shared spectrum are located at different frequency domain locations.

**5.** The method according to claim 4, wherein that in the first bandwidth, the synchronization raster of the shared spectrum and the synchronization raster of the non-shared spectrum are located at different frequency domain locations comprises:

in the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number; or
in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

**6.** The method according to any one of claims 1 to 5, wherein the method further comprises:

sending, by the network device at the frequency domain location corresponding to the synchronization raster of the shared spectrum, an SSB corresponding to the shared spectrum; or
sending, by the network device at the frequency domain location corresponding to the synchronization raster of the non-shared spectrum, an SSB corresponding to the non-shared spectrum.

**7.** The method according to any one of claims 1 to 3, wherein the first rule is:
in the first bandwidth, the synchronization raster of the shared spectrum and the synchronization raster of the non-shared spectrum are located at a same first frequency domain location.

**8.** The method according to claim 7, wherein the method further comprises:
sending, by the network device, first signaling to a terminal device, wherein the first signaling indicates that the first frequency domain location is used to send an SSB corresponding to the shared spectrum or an SSB corresponding to the non-shared spectrum.

**9.** A synchronization raster design method, comprising:

determining, by a terminal device, a frequency range corresponding to a first bandwidth; and
searching, by the terminal device, for a synchronization signal block SSB at a frequency domain location of a synchronization raster corresponding to a global synchronization number in the frequency range corresponding to the first bandwidth.

**10.** The method according to claim 9, wherein the first bandwidth is determined based on a first subcarrier spacing of the SSB, wherein

when the first subcarrier spacing is 120 kilohertz kHz, the first bandwidth is 100 megahertz MHz;
when the first subcarrier spacing is 480 kHz, the first bandwidth is 400 MHz; or
when the first subcarrier spacing is 960 kHz, the first bandwidth is 400 MHz.

**11.** The method according to claim 9 or 10, wherein synchronization raster types comprise a synchronization raster of a shared spectrum and a synchronization raster of a non-shared spectrum.

12. The method according to any one of claims 9 to 11, wherein a first rule is:
in the first bandwidth, the synchronization raster of the shared spectrum and the synchronization raster of the non-shared spectrum are located at different frequency domain locations.

13. The method according to claim 12, wherein that in the first bandwidth, the synchronization raster of the shared spectrum and the synchronization raster of the non-shared spectrum are located at different frequency domain locations comprises:

in the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number; or
in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

14. The method according to any one of claims 9 to 11, wherein a first rule is:
in the first bandwidth, the synchronization raster of the shared spectrum and the synchronization raster of the non-shared spectrum are located at a same first frequency domain location.

15. The method according to claim 14, wherein the method further comprises:
receiving, by the terminal device, first signaling sent by a network device, wherein the first signaling indicates that an SSB sent at the first frequency domain location is an SSB corresponding to the shared spectrum or an SSB corresponding to the non-shared spectrum.

16. A communication apparatus, comprising:

a processing unit, configured to determine a first bandwidth, wherein a frequency range corresponding to the first bandwidth is above 52.6 gigahertz GHz, wherein
the processing unit is further configured to configure a plurality of synchronization rasters in the first bandwidth according to a first rule, wherein one synchronization signal block SSB is placed on each synchronization raster, and each synchronization raster corresponds to one global synchronization number.

17. The apparatus according to claim 16, wherein that a network device determines the first bandwidth comprises:

the network device determines the first bandwidth based on a first subcarrier spacing of the SSB, wherein
when the first subcarrier spacing is 120 kilohertz kHz, the first bandwidth is 100 megahertz MHz;
when the first subcarrier spacing is 480 kHz, the first bandwidth is 400 MHz; or
when the first subcarrier spacing is 960 kHz, the first bandwidth is 400 MHz.

18. The apparatus according to claim 16 or 17, wherein synchronization raster types comprise a synchronization raster of a shared spectrum and a synchronization raster of a non-shared spectrum.

19. The apparatus according to any one of claims 16 to 18, wherein the first rule is:
in the first bandwidth, the synchronization raster of the shared spectrum and the synchronization raster of the non-shared spectrum are located at different frequency domain locations.

20. The apparatus according to claim 19, wherein that in the first bandwidth, the synchronization raster of the shared spectrum and the synchronization raster of the non-shared spectrum are located at different frequency domain locations comprises:

in the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number; or

in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

21. The apparatus according to any one of claims 16 to 20, wherein the apparatus further comprises:

a transceiver unit, configured to: send, at the frequency domain location corresponding to the synchronization raster of the shared spectrum, an SSB corresponding to the shared spectrum, or

send, at the frequency domain location corresponding to the synchronization raster of the non-shared spectrum, an SSB corresponding to the non-shared spectrum.

22. The apparatus according to any one of claims 16 to 18, wherein the first rule is:
in the first bandwidth, the synchronization raster of the shared spectrum and the synchronization raster of the non-shared spectrum are located at a same first frequency domain location.

23. The apparatus according to claim 22, wherein the transceiver unit is further configured to send first signaling to a terminal device, wherein the first signaling indicates that the first frequency domain location is used to send an SSB corresponding to the shared spectrum or an SSB corresponding to the non-shared spectrum.

24. A communication apparatus, comprising:

a processing unit, configured to determine a frequency range corresponding to a first bandwidth; and
the processing unit is further configured to search for a synchronization signal block SSB at a frequency domain location of a synchronization raster corresponding to a global synchronization number in the frequency range corresponding to the first bandwidth.

25. The apparatus according to claim 24, wherein the first bandwidth is determined based on a first subcarrier spacing of the SSB, wherein

when the first subcarrier spacing is 120 kilohertz kHz, the first bandwidth is 100 megahertz MHz;
when the first subcarrier spacing is 480 kHz, the first bandwidth is 400 MHz; or
when the first subcarrier spacing is 960 kHz, the first bandwidth is 400 MHz.

26. The apparatus according to claim 24 or 25, wherein synchronization raster types comprise a synchronization raster of a shared spectrum and a synchronization raster of a non-shared spectrum.

27. The apparatus according to any one of claims 24 to 26, wherein a first rule is:
in the first bandwidth, the synchronization raster of the shared spectrum and the synchronization raster of the non-shared spectrum are located at different frequency domain locations.

28. The apparatus according to claim 27, wherein that in the first bandwidth, the synchronization raster of the shared spectrum and the synchronization raster of the non-shared spectrum are located at different frequency domain locations comprises:

in the first bandwidth, the synchronization raster of the shared spectrum is located at a frequency domain location corresponding to a synchronization raster with a smallest global synchronization number and/or a synchronization raster with a largest global synchronization number, and the synchronization raster of the non-shared spectrum is located at a frequency domain location corresponding to a synchronization raster with a remaining global synchronization number; or

in the first bandwidth, the synchronization raster of the non-shared spectrum is located at a frequency domain location corresponding to a synchronization raster with a smallest global synchronization number and/or a synchronization raster with a largest global synchronization number, and the synchronization raster of the shared spectrum is located at a frequency domain location corresponding to a synchronization raster with a remaining global synchronization number.

29. The apparatus according to any one of claims 24 to 26, wherein a first rule is:
in the first bandwidth, the synchronization raster of the shared spectrum and the synchronization raster of the non-shared spectrum are located at a same first frequency domain location.

30. The apparatus according to claim 29, wherein the apparatus further comprises:
a transceiver unit, configured to receive first signaling sent by a network device, wherein the first signaling indicates that an SSB sent at the first frequency domain location is an SSB corresponding to the shared spectrum or an SSB corresponding to the non-shared spectrum.

31. A communication apparatus, comprising:

a memory, configured to store program instructions and data; and
a processor, configured to: couple to the memory, and execute the instructions in the memory, to implement the method according to any one of claims 1 to 8.

32. A communication apparatus, comprising:

a memory, configured to store program instructions and data; and
a processor, configured to: couple to the memory, and execute the instructions in the memory, to implement the method according to any one of claims 9 to 15.

33. A computer-readable storage medium, wherein the computer-readable medium stores computer instructions, and when the computer instructions are run on a computer, the computer is enabled to perform the communication method according to any one of claims 1 to 15.

34. A chip, comprising a processor and a memory, wherein the memory is configured to store a computer program, and the processor is configured to invoke and run a computer medium stored in the memory, to perform the method according to any one of claims 1 to 15.

35. A communication system, comprising the communication apparatus according to any one of claims 16 to 23 and the communication apparatus according to any one of claims 24 to 30.

FIG. 1

Method 200

FIG. 2

FIG. 3

66.0 GHz ———————————————————————— 24672
—————————————————————— 24671
—————————————————————— 24670
—————————————————————— 24669
—————————————————————— 24668
—————————————————————— 24667
65.9 GHz ————————————————————————

FIG. 4

Communication
apparatus 500

| Transceiver unit 510 | Processing unit 520 |

FIG. 5

Communication apparatus 800

Transceiver
610

Processor
620

Memory
630

FIG. 6

## INTERNATIONAL SEARCH REPORT

International application No.

**PCT/CN2022/109442**

### A. CLASSIFICATION OF SUBJECT MATTER

H04W 16/14(2009.01)i; H04W 72/04(2009.01)i

According to International Patent Classification (IPC) or to both national classification and IPC

### B. FIELDS SEARCHED

Minimum documentation searched (classification system followed by classification symbols)

H04W16/-,H04W72/-

Documentation searched other than minimum documentation to the extent that such documents are included in the fields searched

Electronic data base consulted during the international search (name of data base and, where practicable, search terms used)

CNABS; CNTXT; WPABSC; ENTXTC; CNKI: 同步信号块, SSB, 频率, 频域, 频段, 信道, 位置, 带宽, 搜索, 光栅, 栅格, 编号, 标识, GSCN, ID, 设置, 配置, 分配 VEN; WPABS; ENTXT; 3GPP: SSB, frequency, channel, location, search, raster, number, GSCN, ID, configuration, allocation

### C. DOCUMENTS CONSIDERED TO BE RELEVANT

| Category* | Citation of document, with indication, where appropriate, of the relevant passages | Relevant to claim No. |
|---|---|---|
| Y | WO 2019157769 A1 (OPPO GUANGDONG MOBILE TELECOMMUNICATIONS CO., LTD.) 22 August 2019 (2019-08-22)<br>description, page 7, line 4, page 11, lines 5-6 and 22-25, and page 12, lines 19-22 | 1, 3, 4, 6, 9, 11, 12, 16, 18, 19, 21, 24, 26, 27, 31-35 |
| Y | WO 2019183972 A1 (OPPO GUANGDONG MOBILE TELECOMMUNICATIONS CO., LTD.) 03 October 2019 (2019-10-03)<br>description, page 6, lines 25-35 and page 12, lines 21-24 | 1, 3, 4, 6, 9, 11, 12, 16, 18, 19, 21, 24, 26, 27, 31-35 |
| A | CN 110447204 A (TELEFONAKTIEBOLAGET LM ERICSSON (PUBL)) 12 November 2019 (2019-11-12)<br>entire document | 1-35 |
| A | CN 111836380 A (VIVO COMMUNICATION TECHNOLOGY CO., LTD.) 27 October 2020 (2020-10-27)<br>entire document | 1-35 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2022** | **02 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/109442**

| Patent document cited in search report | | | Publication date (day/month/year) | Patent family member(s) | | | Publication date (day/month/year) |
|---|---|---|---|---|---|---|---|
| WO | 2019157769 | A1 | 22 August 2019 | CN | 111213422 | A | 29 May 2020 |
| | | | | KR | 20200111815 | A | 29 September 2020 |
| | | | | AU | 2018409080 | A1 | 03 September 2020 |
| | | | | EP | 3742842 | A1 | 25 November 2020 |
| | | | | US | 2020275392 | A1 | 27 August 2020 |
| | | | | KR | 20220028191 | A | 08 March 2022 |
| | | | | US | 2021160797 | A1 | 27 May 2021 |
| | | | | CN | 111787620 | A | 16 October 2020 |
| | | | | JP | 2021513804 | A | 27 May 2021 |
| | | | | IN | 202017036940 | A | 02 October 2020 |
| | | | | US | 10952166 | B2 | 16 March 2021 |
| | | | | EP | 3742842 | A4 | 05 May 2021 |
| | | | | AU | 2018409080 | B2 | 07 October 2021 |
| WO | 2019183972 | A1 | 03 October 2019 | US | 2021014805 | A1 | 14 January 2021 |
| | | | | JP | 2021520701 | A | 19 August 2021 |
| | | | | EP | 3780751 | A1 | 17 February 2021 |
| | | | | KR | 20200139743 | A | 14 December 2020 |
| | | | | AU | 2018416731 | A1 | 19 November 2020 |
| | | | | CN | 111972007 | A | 20 October 2020 |
| | | | | IN | 202027046866 | A | 01 January 2021 |
| | | | | EP | 3780751 | A4 | 07 April 2021 |
| | | | | US | 11382054 | B2 | 05 July 2022 |
| CN | 110447204 | A | 12 November 2019 | WO | 2018174799 | A1 | 27 September 2018 |
| | | | | IN | 201947042068 | A | 25 October 2019 |
| | | | | EP | 3602948 | A1 | 05 February 2020 |
| | | | | BR | 112019019471 | A2 | 22 April 2020 |
| | | | | JP | 2020515128 | W | 21 May 2020 |
| | | | | EP | 3602948 | A4 | 30 December 2020 |
| | | | | US | 2021135774 | A1 | 06 May 2021 |
| | | | | CN | 110447204 | B | 28 January 2022 |
| | | | | EP | 3602948 | B1 | 04 May 2022 |
| CN | 111836380 | A | 27 October 2020 | None | | | |

Form PCT/ISA/210 (patent family annex) (January 2015)

**EP 4 358 565 A1**

**Patent documents cited in the description**

- CN 202110901944